(19) Europäisches Patentamt
European Patent Office
Office européen des brevets

(11) **EP 4 629 541 A2**

(12) **EUROPEAN PATENT APPLICATION**

(43) Date of publication:
**08.10.2025 Bulletin 2025/41**

(21) Application number: **25198176.7**

(22) Date of filing: **18.04.2022**

(51) International Patent Classification (IPC):
***H04L 1/1867*** (2023.01)

(52) Cooperative Patent Classification (CPC):
**H04L 1/1858; H04L 1/08; H04L 1/1671;**
**H04L 1/1854; H04L 5/0053; H04L 5/0092;**
H04W 72/21

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(62) Document number(s) of the earlier application(s) in
accordance with Art. 76 EPC:
**22937723.9 / 4 503 489**

(71) Applicant: **GUANGDONG OPPO MOBILE**
**TELECOMMUNICATIONS**
**CORP., LTD.**
**Dongguan, Guangdong 523860 (CN)**

(72) Inventors:
• **ZHANG, Yi**
**Dongguan, Guangdong, 523860 (CN)**
• **LIN, Yanan**
**Dongguan, Guangdong, 523860 (CN)**
• **XU, Jing**
**Dongguan, Guangdong, 523860 (CN)**

(74) Representative: **RGTH**
**Patentanwälte PartGmbB**
**Neuer Wall 10**
**20354 Hamburg (DE)**

Remarks:
This application was filed on 26-08-2025 as a
divisional application to the application mentioned
under INID code 62.

(54) **WIRELESS COMMUNICATION METHOD, TERMINAL DEVICE AND NETWORK DEVICE**

(57)    A terminal device and a network device are provided. The terminal device includes a memory (1520), a processor (1510) and a transceiver (1530), where the memory (1520) is configured to store a program, and the program which, when executed by the processor (1510), causes the processor (1510) of the terminal device to perform: determining a target PUCCH set from a plurality of PUCCHs to be transmitted, in a case that the plurality of PUCCHs to be transmitted exist in a first slot, and the plurality of PUCCHs to be transmitted include at least two PUCCHs with repetition transmission. PUCCHs in the target PUCCH set meet a first condition, and the first condition includes that: if overlapping PUCCHs exist, the at least two PUCCHs with repetition transmission are not included in the overlapping PUCCHs; or no overlapping PUCCHs exist.

Begin

In a case where a plurality of PUCCHs to be transmitted exist in a first slot, and the plurality of PUCCHs to be transmitted include at least two PUCCHs with repetition transmission, determine a target PUCCH set from the plurality of PUCCHs to be transmitted, PUCCHs in the target PUCCH set meeting a first condition — S610

End

FIG. 6

EP 4 629 541 A2

## Description

### TECHNICAL FIELD

The present application relates to the field of communication technologies, and more specifically, to a wireless communication method, a terminal device and a network device.

### BACKGROUND

Some communication systems (such as new radio (NR) systems) have introduced physical uplink control channel (PUCCH) repetition to improve the transmission reliability. In a case of PUCCH repetition, time domain resources of a plurality of PUCCHs may overlap, resulting in conflict in PUCCH repetition.

A conflict resolution mechanism for PUCCH repetition is provided in the related art. For example, only one PUCCH with repetition transmission is included in a single slot, and in this case, the conflict resolution mechanism can ensure that a terminal device and a network device have a consistent understanding of a PUCCH to be transmitted. However, in a case that at least two PUCCHs with repetition transmission are included a single slot, the conflict resolution mechanism may, in some cases, cause the terminal device and the network device to have an inconsistent understanding of a PUCCH to be transmitted, thereby causing transmission failure.

### SUMMARY

The present application provides a wireless communication method, a terminal device and a network device to ensure that the terminal device and the network device have a consistent understanding of a PUCCH to be transmitted, thereby ensuring the normal transmission of the PUCCH.

In a first aspect, a terminal device is provided and includes a memory, a processor and a transceiver. The memory is configured to store a program, and the program which, when executed by the processor, causes the processor of the terminal device to perform: determining a target PUCCH set from a plurality of PUCCHs to be transmitted, in a case that the plurality of PUCCHs to be transmitted exist in a first slot, and the plurality of PUCCHs to be transmitted comprise at least two PUCCHs with repetition transmission. PUCCHs in the target PUCCH set meet a first condition, and the first condition includes that: if overlapping PUCCHs exist, the at least two PUCCHs with repetition transmission are not included in the overlapping PUCCHs; or no overlapping PUCCHs exist.

In a second aspect, a network device is provided and includes a memory, a processor **and a transceiver.** The memory is configured to store a program, and the program which, when executed by the processor, causes the processor of the network device to perform: determining a target PUCCH set from a plurality of PUCCHs to be transmitted, in a case that the plurality of PUCCHs to be transmitted exist in a first slot, and the plurality of PUCCHs to be transmitted include at least two PUCCHs with repetition transmission. PUCCHs in the target PUCCH set meet a first condition, and the first condition includes that: if overlapping PUCCHs exist, the at least two PUCCHs with repetition transmission are not included in the overlapping PUCCHs; or no overlapping PUCCHs exist.

When at least two PUCCHs with repetition transmission are included in a first slot, a target PUCCH set determined by the embodiments of the present application meets a first condition. The existence of the first condition may ensure that there will be no PUCCH in the target PUCCH set that overlaps with a PUCCH with repetition transmission, thereby enabling a terminal device and a network device to have a consistent understanding of the PUCCH to be transmitted in the first slot, and ensuring the normal transmission of the PUCCH.

### BRIEF DESCRIPTION OF THE DRAWINGS

FIG. 1 is a schematic diagram of an architecture of a wireless communication system that may be applied to embodiments of the present application.

FIG. 2 is an example diagram of PUCCH repetition provided in embodiments of the present application.

FIG. 3 is an example diagram of a plurality of PUCCHs to be transmitted provided in an embodiment of the present application.

FIG. 4 is an example diagram of a plurality of PUCCHs to be transmitted provided in another embodiment of the present application.

FIG. 5 is an example diagram of a plurality of PUCCHs to be transmitted provided in yet another embodiment of the present application.

FIG. 6 is a schematic flowchart of a wireless communication method provided in an embodiment of the present application.

FIG. 7 is a schematic flowchart of a wireless communication method provided in another embodiment of the present application.

FIG. 8 is a schematic flowchart of a wireless communication method provided in yet another embodiment of the present application.

FIG. 9 is an example diagram of a plurality of PUCCHs to be transmitted provided in yet another embodiment of the present application.

FIG. 10 is a schematic flowchart of a wireless communication method provided in yet another embodiment of the present application.

FIG. 11 is a schematic diagram of a structure of a terminal device provided in an embodiment of the present application.

FIG. 12 is a schematic diagram of a structure of a terminal device provided in another embodiment of the present application.

FIG. 13 is a schematic diagram of a structure of a network device provided in an embodiment of the present application.

FIG. 14 is a schematic diagram of a structure of a network device provided in another embodiment of the present application.

FIG. 15 is a schematic diagram of a structure of a communication apparatus provided in embodiments of the present application.

## DETAILED DESCRIPTION

Communication system architecture

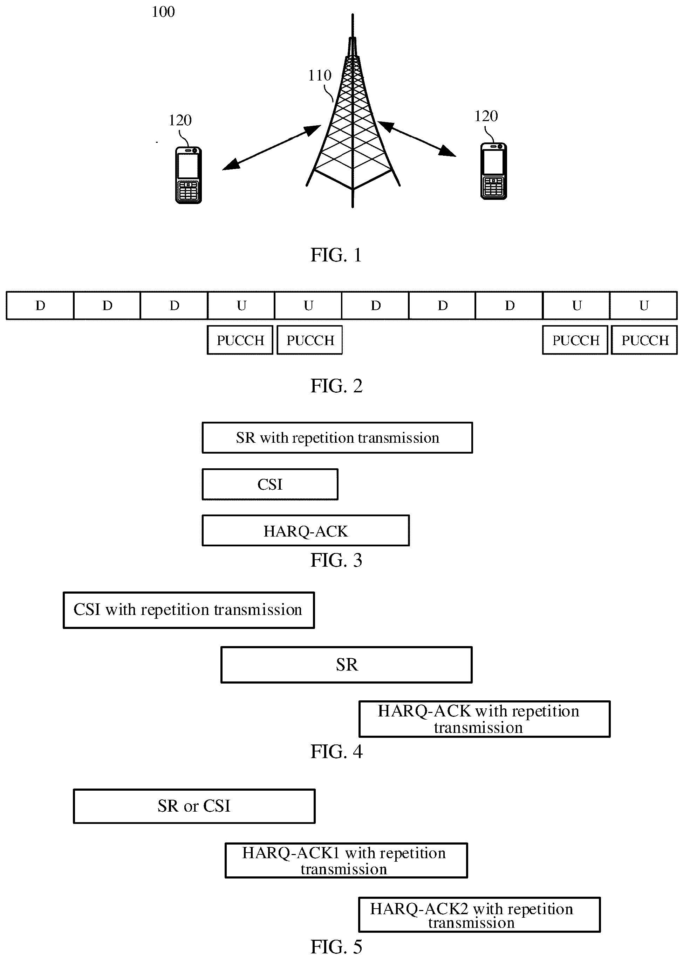

FIG. 1 is a wireless communication system 100 used in the embodiments of the present application. The wireless communication system 100 may include a network device 110 and a terminal device 120. The network device 110 may be a device that communicates with the terminal device 120. The network device 110 may provide communication coverage for a specific geographical area, and may communicate with the terminal device 120 located within the coverage area.

FIG. 1 illustratively shows one network device and two terminals. In some embodiments, the wireless communication system 100 may include a plurality of network devices, and in the coverage range of each network device, other number of terminal devices are included, which is not limited in the embodiments of the present application.

In some embodiments, the wireless communication system 100 may further include a network controller, a mobile management entity, and other network entities, which is not limited in the embodiments of the present application.

It should be understood that, technical solutions of the embodiments of the present application may be applied to various communication systems, such as a 5th generation (5G) system or a new radio (NR), a long term evolution (LTE) system, a LTE frequency division duplex (FDD) system, and a LTE time division duplex (TDD). The technical solutions provided herein may also be applied to future communication systems, such as a 6th generation mobile communication system and a satellite communication system.

The terminal device in the embodiments of the present application may also be referred to as a user equipment (UE), an access terminal, a user unit, a user station, a mobile console, a mobile station (MS), a mobile terminal (MT), a remote station, a remote terminal, a mobile device, a user terminal, a terminal, a wireless communication device, a user agent or a user apparatus. The terminal device in the embodiments of the present application may refer to a device that provides voice and/or data connectivity to a user, and may be configured to connect people, objects, and machines, which is, for example, a handheld device or a vehicle-mounted device with a wireless connection function. The terminal device in the embodiments of the present application may be a mobile phone, a Pad, a laptop computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, or the like. In some embodiments, a UE may be configured to serve as a base station. For example, the UE may serve as a scheduling entity that provides a sidelink signal between UEs in V2X or D2D. For example, a cellular phone and a car communicate with each other using the sidelink signal. A cellular phone and a smart home device communicate with each other without a relay communication signal of a base station.

The network device in the embodiments of the present application may be a device configured to communicate with the terminal device, and the network device may also be referred to as an access network device or a wireless access network device. For example, the network device may be a base station. The network device in the embodiments of the present application may refer to a radio access network (RAN) node (or device) that connects the terminal device to the wireless network. The base station may broadly cover the following various names, or be replaced with the following names, such as: a NodeB, an evolved NodeB (eNB), a next generation NodeB (gNB), a relay station, an access point, a transmitting and receiving point (TRP), a transmitting point (TP), a master station (MeNB), a secondary station (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), and a locating node. The base station may be a macro base station, a micro base station, a relay node, a donor node, or the like, or a combination thereof. The base station may also refer to a communication module, a modem or a chip configured to be arranged in the aforementioned device or apparatus. The base station may also be a mobile switching center, a device that performs the base station function in device-to-device (D2D), vehicle-to-everything (V2X), and machine-to-machine (M2M) communications, a network side device in a 6G network, a device that performs the base station function in future communication systems, or the like. The base station may support networks of the same or different access technologies. The embodiments of the present application do not limit the specific technology and specific device form adopted by the network device.

The base station may be fixed, or may be mobile. For example, a helicopter or drone may be configured to serve as a mobile base station, and one or more cells may move based on the location of the mobile base station. In other embodiments, a helicopter or drone may be configured to serve as a device for communicating with another base station.

In some deployments, the network device in the embodiments of the present application may refer to a CU or a DU, or the network device includes the CU and the DU. The gNB may also include an AAU.

The network device and the terminal device may be deployed on land including indoors or outdoors, which are handheld or vehicle-mounted; or they may be deployed on the water; or they may be deployed on an aircraft, a balloon and a satellite in the air. The embodiments of the present application do not limit the scenarios in which the network device and terminal device are located.

It should be understood that all or part of functions of the communication device in the present application may also be implemented by software functions executing on hardware, or by virtualization functions instantiated on a platform (e.g., a cloud platform).

Physical uplink control channel format

Some communication systems (e.g., the NR system) support a plurality of physical uplink control channel (PUCCH) formats for transmitting uplink control information (UCI). Different PUCCH formats may have different lengths. Based on this, the PUCCH formats may be divided according to the number of time domain symbols occupied by the PUCCH format, for example, into a short PUCCH format and a long PUCCH format. The short PUCCH format may occupy 1 to 2 time domain symbols, and the long PUCCH format may occupy 4 to 14 time domain symbols.

The NR system is taken as an example, the NR system may support the plurality of PUCCH formats for transmitting UCI. Table 1 provides an example of PUCCH formats that the NR system may support. Referring to Table 1, the PUCCH formats supported by the NR system include PUCCH formats 0, 1, 2, 3 and 4, where the PUCCH formats 0 and 2 are short PUCCH formats and may occupy 1 to 2 time domain symbols, and the PUCCH formats 1, 3 and 4 are long PUCCH formats and may occupy 4 to 14 time domain symbols.

In some embodiments, different PUCCH formats may carry different numbers of UCI bits. The NR system is taken as an example, referring to Table 1, the PUCCH formats 0 and 1 may carry a small number of UCI bits, and the maximum number of UCI bits that can be carried is 2; the PUCCH formats 2, 3 and 4 may carry a relatively large number of UCI bits, and the number of UCI bits that can be carried may be greater than 2.

In some embodiments, different PUCCH formats may occupy different numbers of physical resource blocks. Continuing with the NR system as an example, the PUCCH formats 0, 1 and 4 only occupy 1 physical resource block, while the PUCCH formats 2 and 3 may occupy one or more physical resource blocks, for example, may occupy 1 to 16 physical resource blocks.

Table 1

| PUCCH format | Number of time domain symbols | Number of UCI bits carried | Number of physical resource blocks |
|---|---|---|---|
| 0 | 1 to 2 | $\leq 2$ | 1 |
| 1 | 4 to 14 | $\leq 2$ | 1 |
| 2 | 1 to 2 | >2 | 1to 16 |
| 3 | 4 to 14 | >2 | 1to 16 |
| 4 | 4 to 14 | >2 | 1 |

The PUCCH may be used to transmit or carry various types of UCI, which is not limited in the embodiments of the present application. The NR system is taken as an example, the types of UCI supported by the NR system may include hybrid automatic repeat request (HARQ) feedback information, a scheduling request (SR) and channel-state information (CSI). That is, the PUCCH may be used to transmit one or more of the HARQ feedback information, the SR, and the CSI. In some embodiments, the HARQ feedback information may include an acknowledgment (ACK) or a negative acknowledgment (NACK). In some embodiments, the HARQ feedback information may also be referred to as HARQ-ACK, which is not distinguished in the embodiments of the present application.

PUCCH repetition

Some communication systems (e.g., the NR system) support the PUCCH repetition to improve transmission reliability through the PUCCH repetition. For example, the NR system supports the PUCCH repetition for long PUCCH formats (such as the PUCCH formats 1, 3, and 4 described above). It should be understood that in a case that a PUCCH is configured as a PUCCH with repetition transmission, the PUCCH may be repeatedly transmitted in a plurality of slots, for example, may be repeatedly transmitted in a plurality of consecutive slots, or may be repeatedly transmitted in a plurality of nonconsecutive slots.

In some embodiments, a parameter *nrofSlots* may be used to configure whether the PUCCH repetition is needed, and the number of repetitions of a PUCCH format is represented by $N_{\text{PUCCH}}^{\text{repeat}}$ .In some embodiments, the parameter *nrofSlots* is configured by the network device through a higher layer signaling (e.g., a radio resource control (RRC) signaling). In some embodiments, the parameter *nrofSlots* is predefined or preconfigured by a protocol. If the terminal device is configured with the PUCCH repetition, the terminal device may perform the PUCCH repetition within $N_{\text{PUCCH}}^{\text{repeat}}$ slots. It should be noted that, in each of the $N_{\text{PUCCH}}^{\text{repeat}}$ slots, the transmission of the PUCCH occupies the same time domain symbol(s).

The embodiments of the present application do not limit the method by which the terminal device determines the $N_{\text{PUCCH}}^{\text{repeat}}$ slots for the PUCCH repetition. The time division duplex (TDD) spectrum is taken as an example, the terminal device may determine the $N_{\text{PUCCH}}^{\text{repeat}}$ slots for the PUCCH repetition in the following method that: the terminal device searches for $N_{\text{PUCCH}}^{\text{repeat}}$ slots in sequence starting from a slot reported by the UCI (such as the HARQ-ACK, SR or CSI). The $N_{\text{PUCCH}}^{\text{repeat}}$ slots need to meet a certain condition. In some embodiments, the slot reported by the UCI may refer to a slot for which the network device configures or indicates the HARQ-ACK, SR or CSI to report.

The condition that needs to be met for the $N_{\text{PUCCH}}^{\text{repeat}}$ slots may mean that, starting from a certain starting symbol (or start symbol) in the slot, consecutive *nrofsymbols* uplink symbols or flexible symbols are included, where the starting symbol needs to be an uplink symbol or a flexible symbol, and *nrofsymbols* is the number of symbols of PUCCH resource. In some embodiments, the terminal device may determine the starting symbol of the PUCCH resource based on RRC configuration. In some embodiments, *nrofsymbols* may be the number of symbols of the PUCCH resource configured by a RRC parameter. In some embodiments, if the number of symbols available for PUCCH transmission in a slot is less than the configured *nrofsymbols,* the terminal device does not transmit a PUCCH in this slot. In this case, the terminal device may repeatedly transmit in a plurality of nonconsecutive slots.

FIG. 2 provides an example of the PUCCH repetition. As shown in FIG. 2, among the 10 slots shown in the figure, slots 0 to 2 and slots 5 to 7 may be used to transmit downlink control information (DCI), slots 3 to 4 and slots 8 to 9 may be used to transmit the UCI, and the number of symbols available for PUCCH transmission in these slots is greater than the configured *nrofsymbols.* Therefore, when the number of repetitions of the PUCCH format is $N_{\text{PUCCH}}^{\text{repeat}} = 4$ , the PUCCH may be repeatedly transmitted in four nonconsecutive slots, namely slots 3 to 4 and slots 8 to 9.

PUCCH repetition conflict and a conflict resolution mechanism

When a conflict occurs in a resource of a PUCCH with single transmission, a multiplexing technology may be used to resolve the conflict in resources of a plurality of PUCCHs with single transmission. When the PUCCH is repeatedly transmitted, time domain resources of a plurality of PUCCHs may overlap, resulting in the conflict in the PUCCH_repetition. In this case, the traditional conflict resolution mechanism of the PUCCH with single transmission cannot be used. This is because, in some communication systems, the PUCCH is encoded using Polar code, and the merging of Polar code requires that the repeatedly transmitted UCI information occupy the same physical resource. In this case, the communication system does not support multiplexing transmission of a plurality of types of UCI information when the PUCCH is repeatedly transmitted. The NR system is taken as an example, the NR PUCCH is encoded using Polar code, so that the NR system does not support the multiplexing transmission of the plurality of types of UCI information when the PUCCH is repeatedly transmitted.

That is to say, when the PUCCH is repeatedly transmitted, in a case that domain resources of a plurality of PUCCH overlap, and cannot be multiplexed, a corresponding conflict resolution mechanism needs to be designed. For this situation, a conflict resolution mechanism for the PUCCH repetition is provided in the related art. Continuing with the NR system as an example, the conflict resolution mechanism for the PUCCH repetition in the NR system is as follows.

The PUCCHs with overlapping resources are divided into two groups, where a first PUCCH is a PUCCH with repetition transmission, a second PUCCH group includes at least one PUCCH, and a PUCCH in the second PUCCH group may be a PUCCH with repetition transmission or a PUCCH with single transmission. The first PUCCH and the PUCCH in the second PUCCH group have an overlapping resource in some slots. For these overlapping slots and priorities of UCI types (HARQ-ACK > SR > CSI with higher priority > CSI with lower priority) (A UE does not multiplex different UCI types in a PUCCH transmission with repetitions over $N_{\text{PUCCH}}^{\text{repeat}} > 1$ slots. If a UE would transmit a first PUCCH over more than one slot and at least a second PUCCH over one or more slots, and the transmissions of the first PUCCH and the second PUCCH would overlap in a number of slots then, for each slot of the number of slots and with UCI type priority of HARQ-ACK > SR > CSI with higher priority > CSI with lower priority):

1) the UE does not expect the first PUCCH and any of the second PUCCHs to start at a same slot and include a UCI type with same priority;

2) if the first PUCCH and any of the second PUCCHs include a UCI type with same priority, the UE transmits the PUCCH starting at an earlier slot and does not transmit the PUCCH starting at a later slot;

3) if the first PUCCH and any of the second PUCCHs do not include a UCI type with same priority, the UE transmits the PUCCH that includes the UCI type with higher priority and does not transmit the PUCCH that include the UCI type with lower priority.

In a case that the PUCCH repetition conflict is resolved according to the conflict resolution mechanism, it can be found that, for the case where only one PUCCH with repetition transmission is included a single slot (that is, other PUCCHs are all PUCCHs with single transmission), the conflict resolution mechanism has a definite output result. That is, it can ensure that the terminal device and the network device have a consistent understanding of the PUCCH to be transmitted, the normal transmission of the PUCCH may be ensured. FIG. 3 shows an example in which only one PUCCH with repetition transmission is included in a single slot. As shown in FIG. 3, there are three PUCCHs to be transmitted in a single slot, SR is a PUCCH with repetition transmission, and CSI and HARQ-ACK are both PUCCHs with single transmission. According to the conflict resolution mechanism described above, the SR may be determined as the first PUCCH, the CSI and HARQ-ACK may be regarded as PUCCHs in the second PUCCH group, and priorities of UCI types included in the three PUCCHs are different (HARQ-ACK > SR > CSI). Therefore, a target PUCCH set may be determined in accordance with 3) of the conflict resolution mechanism described above. That is, the terminal device only transmits a PUCCH including a UCI type with a higher priority, i.e., transmits the HARQ-ACK, and does not transmit a PUCCH including a UCI type with lower priority, i.e., does not transmit the SR and CSI.

However, in a case that at least two PUCCHs with repetition transmission are included in a single slot, the conflict resolution mechanism may not be able to obtain a definite output result in some cases, so that the terminal device and the network device may have an inconsistent understanding of the PUCCH to be transmitted, which may lead to transmission failure. Several examples are provided below to describe situations where the conflict resolution mechanism cannot obtain a definite output result.

In some embodiments, a first PUCCH, a second PUCCH and a third PUCCH are included in a single slot. The first PUCCH and the second PUCCH are PUCCHs with repetition transmission, the first PUCCH and the second PUCCH do not overlap (or resources of the first PUCCH and the second PUCCH do not overlap, and the description that PUCCHs overlap/do not overlap mentioned below may mean that resources of the PUCCHs overlap/do not overlap), the third PUCCH overlaps with both the first PUCCH and the second PUCCH, and the priority of the third PUCCH is between the priority of the first PUCCH and the priority of the second PUCCH. In this case, execution steps of the conflict resolution are different and the final output results are also different. A specific example is provided below in conjunction with FIG. 4. As shown in FIG. 4, 3 PUCCHs are included in a single slot, where CSI and HARQ-ACK are PUCCHs with repetition transmission, and SR is a PUCCH with single transmission. According to the conflict resolution mechanism described above, if the CSI is regarded as the first PUCCH, then the SR is regarded as the second PUCCH, and the CSI is discarded according to the UCI type priority; if the HARQ-ACK is regarded as the first PUCCH, then the SR is regarded as the second PUCCH, the SR is discarded according to the UCI type priority, and the terminal device finally only transmits the HARQ-ACK. Thus, if the HARQ-ACK is regarded as the first PUCCH, then the SR is regarded as the second PUCCH, and the SR is discarded according to the UCI type priority; after the SR is discarded, the resources of the CSI and HARQ-ACK do not overlap, and the terminal device finally transmits the CSI and HARQ-ACK. In this way, the target PUCCH set determined by the terminal device may be {HARQ-ACK with repetition transmission}, while the target PUCCH set determined by the network device may be {CSI with repetition transmission, HARQ-ACK with repetition transmission}. The two have an inconsistent understanding, which leads to transmission failure.

In some embodiments, a first PUCCH, a second PUCCH and a third PUCCH are included in a single slot. The first PUCCH and the second PUCCH are PUCCHs with repetition transmission, the first PUCCH overlaps with the second PUCCH, and the priority of the first PUCCH is lower than the priority of the second PUCCH; the first PUCCH overlaps with the third PUCCH, and the priority of the third PUCCH is lower than the first PUCCH. In this case, execution steps of the conflict resolution are different and the final output results are also different. A specific example is provided below in conjunction with FIG. 5. As shown in FIG. 5, 3 PUCCHs are included in a single slot, where HARQ-ACK1 and HARQ-ACK2 are PUCCHs with repetition transmission, a starting slot of the HARQ-ACK2 is earlier than the starting slot of the HARQ-ACK1, and the SR (or CSI) is a PUCCH with single transmission. According to the conflict resolution mechanism described above, if the HARQ-ACK1 is regarded as the first PUCCH, then the SR (or CSI) and HARQ-ACK2 may be regarded as the second PUCCHs. In this case, the SR (or CSI) is discarded according to the UCI type priority, the HARQ-ACK1 is discarded according to whether the starting slot is early or late, and the terminal device finally only transmits the HARQ-ACK2. If the HARQ-ACK2 is regarded as the first PUCCH, then the HARQ-ACK1 is regarded as the second PUCCH, and the HARQ-ACK1 is discarded according to whether the starting slot is early or late; after the HARQ-ACK1 is discarded, the resources of the SR (or CSI) and HARQ-ACK2 do not overlap, and the terminal device finally transmits the SR (or CSI) and HARQ-ACK2. In this way, the target PUCCH set determined by the terminal device may be {HARQ-ACK2 with repetition transmission}, while the target PUCCH set determined by the network device may be {SR (or CSI), HARQ-ACK2 with repetition transmission}. The two have an inconsistent understanding, which leads to transmission failure.

It can be seen that, in the case that at least two PUCCHs with repetition transmission are included in a single slot, the existing conflict resolution mechanism may not be able to obtain a definite output result. This is because when there are the plurality of PUCCHs with repetition transmission, the different execution steps of the conflict resolution will affect the result, which may cause the terminal device and the network device to have an inconsistent understanding of the PUCCH to be transmitted, resulting in transmission failure.

Therefore, for a case where the at least two PUCCHs with repetition transmission are included in a single slot, the PUCCH conflict is a problem that needs to be solved urgently.

In order to solve the above problem, the embodiments of the present application provide a wireless communication method, a terminal device and a network device to ensure that the terminal device and the network device have a consistent understanding of the PUCCH that is determined to be transmitted in a first slot, thereby ensuring the normal transmission of the PUCCH. Specifically, two embodiments are provided in the present application, which are described in detail below in conjunction with the accompanying drawings.

Embodiment 1

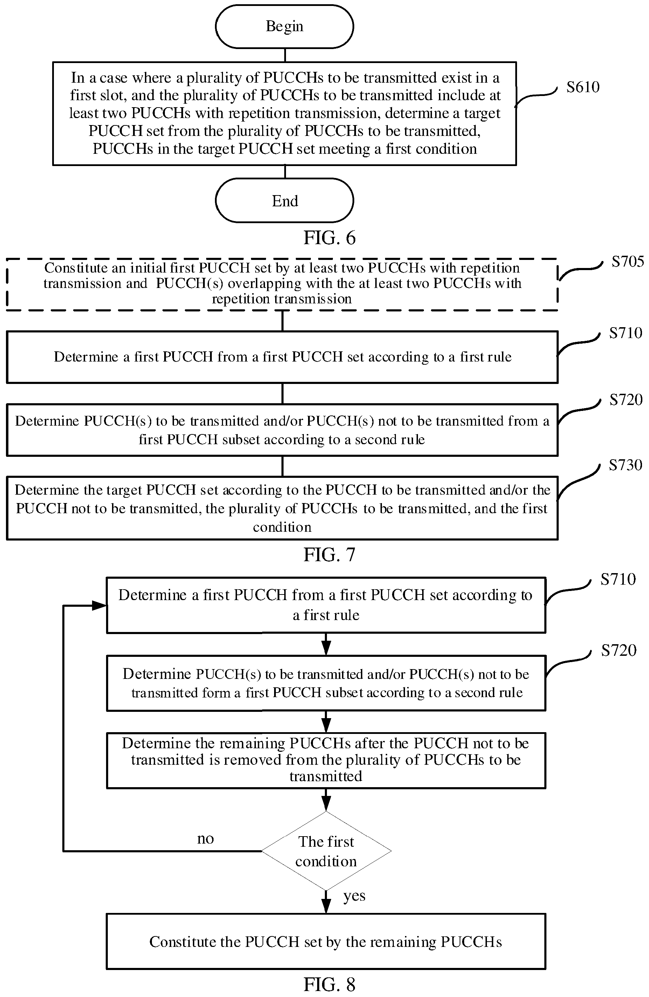

FIG. 6 is a schematic flowchart of a wireless communication method provided in an embodiment of the present application. The method shown in FIG. 6 may be performed by a terminal device, or may be performed by a network device. In some embodiments, the process of performing the method by the terminal device or the network device may be considered to be consistent. The terminal device and the network device may be, for example, the terminal device 120 and the network device 110 in FIG. 1. The method shown in FIG. 6 includes step S610. The step is described in detail below.

In the step S610, in a case that a plurality of PUCCHs to be transmitted exist in a first slot, and the plurality of PUCCHs to be transmitted include at least two PUCCHs with repetition transmission, a target PUCCH set is determined from the plurality of PUCCHs to be transmitted, and PUCCHs in the target PUCCH set meet a first condition.

There may be one or more the first conditions. In some embodiments, the first condition may be that overlapping PUCCHs exist in the target PUCCH set, and the overlapping PUCCHs do not include the PUCCH with repetition transmission. In some embodiments, the first condition may be that no overlapping PUCCHs exist in the target PUCCH set. In some embodiments, the first condition may be that no PUCCH that overlaps with the PUCCH with repetition transmission exists in the target PUCCH set. For example, the target PUCCH set may simultaneously meet two conditions: no overlapping PUCCHs existing and no PUCCH that overlaps with the PUCCH with repetition transmission existing. In a specific embodiment, the PUCCHs in the target PUCCH set do not overlap with each other. In another specific embodiment, in the target PUCCH set, there may be overlap between the PUCCHs with single transmission, but there is no overlap between the PUCCHs with repetition transmission, and between the PUCCH with repetition transmission and the PUCCH with single transmission.

The plurality of PUCCHs to be transmitted may include PUCCHs with repetition transmission and PUCCH(s) with single transmission, or only include the PUCCHs with repetition transmission. In some embodiments, there may be overlap between the plurality of PUCCHs to be transmitted. For example, there may be overlap between at least two PUCCHs with repetition transmission in the plurality of PUCCHs to be transmitted. Alternatively, remaining PUCCH(s) (e.g., remaining PUCCH(s) with single transmission) in the plurality of PUCCHs to be transmitted except the at least two PUCCHs with repetition transmission may overlap with at least one of the at least two PUCCHs with repetition transmission. Alternatively, any one of the plurality of PUCCHs to be transmitted may overlap with at least one remaining PUCCH in the plurality of PUCCHs to be transmitted except the any one PUCCH. In some embodiments, the overlap between PUCCHs mentioned in the embodiments of the present application may refer to partial overlap or complete overlap between the PUCCHs.

The embodiments of the present application do not limit the formats of the plurality of PUCCHs to be transmitted. For example, the formats of the plurality of PUCCHs to be transmitted may be a long PUCCH format, or may be a short PUCCH format. In some embodiments, the format of the PUCCH with repetition transmission in the plurality of PUCCHs to be transmitted may be the long PUCCH format.

In the embodiments of the present application, the PUCCH with repetition transmission may be repeatedly transmitted in a plurality of consecutive slots or in a plurality of nonconsecutive slots. It should be understood that, in the embodiments of the present application, the PUCCH with repetition transmission occupies same time domain symbol(s) when transmitted in a slot.

The embodiments of the present application do not limit the number of repetitions of the PUCCH with repetition transmission. For example, the number of repetitions $N_{PUCCH}^{repeat}$ of the PUCCH with repetition transmission may be 2, 4, etc. In some embodiments, the numbers of repetitions of different PUCCHs with repetition transmission may be the same. In some embodiments, the numbers of repetitions of different PUCCHs with repetition transmission may be different. In some embodiments, the number of repetitions of the PUCCH may be configured through a parameter *nrofSlots* in the embodiments of the present application, and the parameter may be configured by the network device, or predefined or preconfigured by a protocol.

The embodiments of the present application do not limit a method for determining the $N_{PUCCH}^{repeat}$ slots for the PUCCH repetition. For example, starting from a slot reported by UCI, $N_{PUCCH}^{repeat}$ slots may be searched in sequence, a starting symbol of the $N_{PUCCH}^{repeat}$ slots need to be an uplink symbol or flexible symbol, and the number of symbols available for PUCCH transmission in the $N_{PUCCH}^{repeat}$ slots is greater than or equal to the number of symbols of the PUCCH resource.

The target PUCCH set may refer to a set consisting of part of the plurality of PUCCHs to be transmitted, and the PUCCH in the target PUCCH set does not conflict with the PUCCH with repetition transmission. The target PUCCH set may include one or more (at least two) PUCCHs, and the one or more PUCCHs may include the PUCCH(s) with repetition transmission and/or the PUCCH(s) with single transmission. In some embodiments, after the target PUCCH set is determined, all PUCCHs in the target PUCCH set may be transmitted in the first slot. In some embodiments, after the target PUCCH set is determined, part or all of the PUCCHs in the target PUCCH set are not transmitted in the first slot. This is because there may be other conflict handling mechanisms that prevent part or all of the PUCCHs in the target PUCCH set from being transmitted in the first slot.

When at least two PUCCHs with repetition transmission are included in the first slot, the target PUCCH set determined in the embodiment of the present application meets the first condition. The existence of the first condition may ensure that no PUCCH that overlaps with the PUCCH with repetition transmission exists in the target PUCCH set, thereby enabling the terminal device and the network device to have a consistent understanding of the determined target PUCCH set, and ensuring normal transmission of the PUCCH.

FIG. 7 is a schematic flowchart of a wireless communication method provided in another embodiment of the present application. In conjunction with FIG. 7, how to determine the target PUCCH set from the plurality of PUCCHs to be transmitted will be described in detail below. The method shown in FIG. 7 may be performed by the terminal device or the network device. The method may include steps S710 to S730.

In the step S710, a first PUCCH is determined from a first PUCCH set according to a first rule.

The first PUCCH set includes part or all of the at least two PUCCHs with repetition transmission. For example, when the first PUCCH is selected for the first time, the first PUCCH set may include all of the at least two PUCCHs with repetition transmission. Alternatively, when the target PUCCH set determined according to the selected first PUCCH does not meet the first condition, it may be necessary to select a new first PUCCH from the obtained first PUCCH set to redetermine the target PUCCH set. In this case, the first PUCCH set does not include certain PUCCHs that have been previously removed. It should be noted that the first PUCCH set mentioned below has the same meaning, which may include all of the at least two PUCCHs with repetition transmission, or may include part of the at least two PUCCHs with repetition transmission.

In some embodiments, the first PUCCH is a PUCCH with repetition transmission.

The setting of the first rule may enable the terminal device and the network device to determine the first PUCCH according to the same rule, and then determine the target PUCCH set. The consistent understanding of the first PUCCH by the terminal device and the network device may ensure the consistency of the conflict execution order, thereby ensuring that the target PUCCH sets determined by the two are consistent.

The first PUCCH is selected from the first PUCCH set. In the case that the first PUCCH is selected from the first PUCCH set according to the first rule, there may be one or more first rules.

In some embodiments, the first rule may include: determining the first PUCCH based on a priority of a UCI type included in the PUCCH. For example, based on the priority of the UCI type included in the PUCCH, a PUCCH including the UCI type with the highest priority may be determined from the first PUCCH set as the first PUCCH. That is, the first PUCCH is the PUCCH including the UCI type with the highest priority in the first PUCCH set.

In some embodiments, the first rule may include: determining the first PUCCH based on a starting slot of the PUCCH. For example, based on the starting slot of the PUCCH, a PUCCH with the earliest starting slot may be determined from the first PUCCH set as the first PUCCH. That is, the first PUCCH is the PUCCH with the earliest starting slot in the first PUCCH set.

It should be noted that, in some embodiments, it may also be considered that the first rule includes: determining the first PUCCH according to a priority of the PUCCH. For example, based on the priority of the PUCCH, a PUCCH with the highest priority may be determined from the first PUCCH set as the first PUCCH. In this case, it may be considered that the priority of the PUCCH is determined according to the priority of the UCI type carried by the PUCCH, and/or, determined according to the starting slot of the PUCCH. For example, the priority of the PUCCH is determined according to the priority of the UCI type carried by the PUCCH; if the at least two PUCCHs with repetition transmission include a plurality of PUCCHs including a UCI type with the same priority, the priorities of the plurality of PUCCHs may be determined according to the starting slots of the plurality of PUCCHs.

In the embodiment of the present application, there may be one or more UCI types, which may include, for example, one or more of HARQ-ACK, SR and CSI. The priority of the UCI type may refer to the existing standard. For example, the priority of HARQ-ACK is higher than the priority of SR, and the priority of SR is higher than the priority of CSI. CSI may include higher priority CSI and lower priority CSI. As the name implies, the priority of higher priority CSI is higher than the priority of lower priority CSI. In this case, it may be considered that the priority of SR is higher than the priority of higher priority CSI, and the priority of higher priority CSI is higher than the priority of lower priority CSI. In other words, the priorities of UCI types may be expressed as: HARQ-ACK>SR>higher priority CSI>lower priority CSI. In other words, for CSI, it may include CSI of a first priority and CSI of a second priority, where the first priority is higher than the second priority, and the priorities of the UCI types may be expressed as: HARQ-ACK>SR>CSI of the first priority>CSI of the second priority.

In some embodiments, when the priority of the UCI type is determined, the situation of the service corresponding to the UCI may not be considered.

In some embodiments, for PUCCH 1 and PUCCH 2 of the at least two PUCCHs with repetition transmission, if the PUCCH 1 and the PUCCH 2 carry different UCI types (for example, the PUCCH 1 carries HARQ-ACK and the PUCCH 2 carries SR), the PUCCH 1 may be selected as the first PUCCH according to the UCI type priority.

In some embodiments, for PUCCH 1 and PUCCH 3 of the at least two PUCCHs with repetition transmission, if the PUCCH 1 and the PUCCH 3 carry the same UCI type (for example, both are used to carry HARQ-ACK), and the starting slot of the PUCCH 1 is later than the starting slot of the PUCCH 3, the PUCCH 3 may be selected as the first PUCCH according to the starting slot of the PUCCH.

The determination of the first PUCCH based on the priority of the UCI type included in the PUCCH or based on the starting slot of the PUCCH may ensure that as many PUCCHs as possible are transmitted in the overlapping PUCCH resources.

In some embodiments, the first rule may include: determining the first PUCCH based on a starting symbol of the PUCCH. For example, based on the starting symbol of the PUCCH, a PUCCH with the earliest starting symbol may be determined from the first PUCCH set as the first PUCCH. That is, the first PUCCH is the PUCCH with the earliest starting symbol in the first PUCCH set. In some embodiments, a PUCCH with the latest starting symbol may also be determined from the first PUCCH set based on the starting symbol of the PUCCH as the first PUCCH, but the embodiments of the present application are not limited to this. In some embodiments, when the first PUCCH is determined from the first PUCCH set based on the starting symbol of the PUCCH, the priorities of the UCI types of the PUCCHs in the first PUCCH set may be the same or different.

In some embodiments, for the PUCCH 1 and the PUCCH 2 of the at least two PUCCHs with repetition transmission, the starting symbol of the PUCCH 1 is the 2nd symbol of the first slot, and the starting symbol of the PUCCH 2 is the 5th symbol of the first slot; and thus, the PUCCH 1 with an earlier starting symbol may be selected as the first PUCCH based on the starting symbol of the PUCCH. It should be understood that, in this case, the priorities of the UCI types of the PUCCH 1 and the PUCCH 2 may be the same, for example, both are HARQ-ACK; or, the priorities of the UCI types of the PUCCH 1 and the PUCCH 2 may be different, for example, the PUCCH 1 is HARQ-ACK and the PUCCH 2 is SR.

The determination of the first PUCCH based on the starting symbol of the PUCCH may ensure that the system processes the PUCCHs in the order of early and late transmission, which is consistent with the processing principle of the PUCCHs with repetition transmission.

In some embodiments, the first rule may include: determining the first PUCCH based on duration of the PUCCH. For example, a PUCCH with the longest duration may be determined from the first PUCCH set based on the duration of the PUCCH as the first PUCCH. That is, the first PUCCH is the PUCCH with the longest duration in the first PUCCH set. In some embodiments, a PUCCH with the shortest duration may also be determined from the first PUCCH set based on the duration of the PUCCH as the first PUCCH, which is not limited in the embodiments of the present application.

In some embodiments, for the PUCCH 1 and the PUCCH 2 of the at least two PUCCHs with repetition transmission, the duration of the PUCCH 1 is 3 symbols and the duration of the PUCCH 2 is 4 symbols. Thus, based on the duration of the PUCCH, the PUCCH 2 with longer duration may be selected as the first PUCCH.

The first PUCCH is determined based on the duration of the PUCCH (for example, the PUCCH with the longer duration is selected as the first PUCCH), which may ensure that the PUCCH with more information is transmitted preferentially.

It should be noted that the first rule provided in the embodiments of the present application may include one or more of the rules described above. For example, the first PUCCH may be determined based on the priority of the UCI type included in the PUCCH; or the first PUCCH may be determined according to both the starting symbol and duration of the PUCCH. As an implementation, in the case that the first PUCCH is determined based on the starting symbol of the PUCCH, if the at least two PUCCHs with repetition transmission include a plurality of PUCCHs with the same starting symbol, the PUCCH with the longest duration may be selected from the plurality of PUCCHs as the first PUCCH. In some embodiments, if the at least two PUCCHs with repetition transmission include a plurality of PUCCHs with the same starting symbol and duration, any one PUCCH may be selected from the plurality of PUCCHs as the first PUCCH.

After the first PUCCH is determined according to the step S710, the target PUCCH set may be determined from the plurality of PUCCHs to be transmitted according to the first PUCCH. The detailed description will be provided below in conjunction with steps S720 and S730.

In the step S720, PUCCH(s) to be transmitted and/or PUCCH(s) not to be transmitted are determined from a first PUCCH subset according to a second rule.

The first PUCCH subset consists of the first PUCCH determined in the step S710 and PUCCH(s) overlapping with the first PUCCH. In some embodiments, the PUCCH overlapping with the first PUCCH may be a PUCCH with repetition transmission or a PUCCH with single transmission. The three PUCCHs to be transmitted shown in FIG. 4 are taken as an example, if the first PUCCH is determined based on the priority of the UCI type included in the PUCCH in the step S710, then the first PUCCH determined for the first time is the HARQ-ACK with repetition transmission, and the first PUCCH subset includes the HARQ-ACK with repetition transmission and the PUCCH overlapping therewith. That is, the first PUCCH subset includes { HARQ-ACK with repetition transmission, SR}.

There may be one or more second rules. For example, the second rule may refer to a conflict resolution mechanism for repetition transmission in the existing standard. For example, the first PUCCH subset may be divided into two groups, namely the first PUCCH and a second PUCCH subset. The second PUCCH subset is a set consisting of PUCCH(s) overlapping with the first PUCCH. In this case, the PUCCH to be transmitted and/or the PUCCH(s) not to be transmitted may be determined according to one or more of the second rules.

Specifically, the second rule may include at least one of the following: that if any one PUCCH in the second PUCCH subset includes the UCI type with the same priority as that of the first PUCCH, then the PUCCH with the earlier starting slot is transmitted and/or the PUCCH with the later starting slot is not transmitted; that if any one PUCCH in the second PUCCH subset does not include the UCI type with the same priority as that of the first PUCCH, then the PUCCH including the UCI type with the higher priority is transmitted and/or the PUCCH including the UCI type with the lower priority is not transmitted. That is to say, if any one PUCCH in the second PUCCH subset includes the UCI type with the same priority as that of the first PUCCH, then in any one PUCCH of the second PUCCH subset and the first PUCCH, the PUCCH with the earlier starting slot is transmitted and/or the PUCCH with the later starting slot is not transmitted; if any one PUCCH in the second PUCCH subset does not include the UCI type with the same priority as that of the first PUCCH, then in any one PUCCH of the second PUCCH subset and the first PUCCH, the PUCCH including the UCI type with the higher priority is transmitted and/or the PUCCH including the UCI type with the lower priority is not transmitted. In other words, if the starting slot of any one PUCCH in the second PUCCH subset is a second slot, the starting slot of the first PUCCH is a third slot, and the second slot is earlier than the third slot, then the any one PUCCH is transmitted; conversely, if the second slot is later than the third slot, then the first PUCCH is transmitted. If the priority of the UCI type priority included in any one PUCCH in the second PUCCH subset is a first priority, the priority of the UCI type included in the first PUCCH is a second priority, and the first priority is higher than the second priority, then the any one PUCCH is transmitted; conversely, if the first priority is lower than the second priority, then the first PUCCH is transmitted.

In an example where the first PUCCH subset includes { HARQ-ACK with repetition transmission, SR}, the HARQ-ACK with repetition transmission is the first PUCCH, and the second PUCCH subset includes {SR}; according to the second rule, the HARQ-ACK with the higher priority may be transmitted, and the SR with the lower priority may not be transmitted.

It should be understood that, in the embodiments of the present application, the plurality of PUCCHs to be transmitted may refer to PUCCHs that need to be transmitted and are configured by the network device for the terminal device in the first slot; the determined PUCCH to be transmitted may refer to a PUCCH that may be transmitted in the first slot and determined by the terminal device from the plurality of PUCCHs to be transmitted according to the first rule and/or the second rule; the determined PUCCH(s) not to be transmitted may refer to a PUCCH that will not be transmitted in the first slot and determined by the terminal device from the plurality of PUCCHs to be transmitted according to the first rule and/or the second rule.

In the step S730, the target PUCCH set is determined according to the PUCCH to be transmitted and/or the PUCCH(s) not to be transmitted, the plurality of PUCCHs to be transmitted, and the first condition.

As an implementation, the target PUCCH set may be determined according to the plurality of PUCCHs to be transmitted, the PUCCH(s) not to be transmitted, and the first condition. Specifically, if remaining PUCCH(s) after the PUCCH(s) not to be transmitted are removed from the plurality of PUCCHs to be transmitted meet the first condition, the remaining PUCCH(s) may constitute the target PUCCH set. That is, the remaining PUCCH(s) may be determined as PUCCH(s) in the target PUCCH set. In other words, after the PUCCH(s) not to be transmitted are determined in the step S720, the PUCCH(s) not to be transmitted may be removed from the plurality of PUCCHs to be transmitted to obtain a second PUCCH set; then, it is determined whether the second PUCCH set meets the first condition; and if the second PUCCH set meets the first condition, the second PUCCH set is determined as the target PUCCH set. Continuing with the three PUCCHs to be transmitted shown in FIG. 4 as an example, after the SR is determined not to be transmitted in the step S720, the SR is removed from the three PUCCHs to be transmitted; the remaining PUCCHs are the HARQ-ACK with repetition transmission and the CSI with repetition transmission, and the remaining PUCCHs do not overlap (meet the first condition). Thus, the HARQ-ACK with repetition transmission and the CSI with repetition transmission may be determined as the PUCCHs in the target PUCCH set. That is, the target PUCCH set is { HARQ-ACK with repetition transmission, CSI with repetition transmission}.

As another implementation, the target PUCCH set may be determined according to the plurality of PUCCHs to be transmitted, the PUCCH to be transmitted and the first condition. Specifically, if the PUCCH(s) to be transmitted determined from the plurality of PUCCHs to be transmitted meet the first condition, then the determined PUCCH(s) to be transmitted may constitute the target PUCCH set. That is, the determined PUCCH to be transmitted may be determined as the PUCCH in the target PUCCH set. Continuing with the three PUCCHs to be transmitted shown in FIG. 4 as an example, after the HARQ-ACK with repetition transmission is determined to be transmitted in the step S720, since the CSI with repetition transmission and the HARQ-ACK with repetition transmission do not overlap, the CSI with repetition transmission is determined to be transmitted. Based on this, the HARQ-ACK with repetition transmission and the CSI with repetition transmission meet the first condition, and the HARQ-ACK with repetition transmission and the CSI with repetition transmission may be determined as the PUCCHs in the target PUCCH set. That is, the target PUCCH set is { HARQ-ACK with repetition transmission, CSI with repetition transmission}.

In some embodiments, the remaining PUCCHs after the PUCCH(s) not to be transmitted are removed from the plurality of PUCCHs to be transmitted may not meet the first condition. In this case, the steps S710 and S720 may be repeated until the first condition is met. For example, referring to FIG. 8, after the steps S710 and S720 are performed to determine the PUCCH to be transmitted and/or the PUCCH(s) not to be transmitted, it is determined whether the remaining PUCCHs after the PUCCH(s) not to be transmitted are removed from the plurality of PUCCHs to be transmitted meet the first condition; if the first condition is met, the remaining PUCCHs constitute the target PUCCH set; and if the first condition is not met, the cycle is restarted (the steps S710 and S720 are repeatedly performed, and then it is determined whether the first condition is met).

It should be noted that, when the steps S710 and S720 are repeatedly performed, and the first PUCCH is selected, except the first PUCCH that has been selected and/or the PUCCH with repetition transmission that has been determined not to be transmitted in the previous cycle, a remaining PUCCH with repetition transmission should be selected as the new first PUCCH. That is to say, when selected for the first time, the first PUCCH may be selected from all PUCCHs in the at least two PUCCHs with repetition transmission; when selected by repeatedly performing the step S710, the new first PUCCH is selected from remaining PUCCHs with repetition transmission except the first PUCCH that has been previously selected and/or the PUCCH with repetition transmission that has been determined not to be transmitted in the previous cycle. For example, assuming that in FIG. 4, after the PUCCH(s) not to be transmitted are removed from the three PUCCHs to be transmitted, the remaining PUCCHs do not meet the first condition, then when the steps S710 and S720 are repeatedly performed to select the new first PUCCH based on the first rule (for example, the priority of the UCI type included in the PUCCH), the new first PUCCH needs to be selected from remaining PUCCHs with repetition transmission except the HARQ-ACK with repetition transmission (for example, the CSI with repetition transmission is selected as the new first PUCCH).

With continued reference to FIG. 7, in some embodiments, the method shown in FIG. 7 may further include step S705. In the step S705, the at least two PUCCHs with repetition transmission and PUCCH(s) overlapping with the at least two PUCCHs with repetition transmission constitute an initial first PUCCH set (including all PUCCHs in the at least two PUCCHs with repetition transmission). After the step S705, the first PUCCH may be determined based on the initial first PUCCH set.

The PUCCH to be transmitted and/or the PUCCH(s) not to be transmitted are determined based on the first PUCCH in the method described above. In some embodiments, the first PUCCH may not be determined, and the PUCCH to be transmitted and/or the PUCCH(s) not to be transmitted may be determined directly based on the plurality of PUCCHs to be transmitted. In other words, the terminal device or the network device may determine the target PUCCH set from the plurality of PUCCHs to be transmitted.

As an implementation, the PUCCH to be transmitted and/or the PUCCH(s) not to be transmitted may be selected from the plurality of PUCCHs to be transmitted based on the priority of the UCI type included in the PUCCH, and/or the PUCCH to be transmitted and/or the PUCCH(s) not to be transmitted may be selected from the plurality of PUCCHs to be transmitted based on the starting slot of the PUCCH. For example, if the plurality of PUCCHs to be transmitted include the UCI type with the same priority, then the PUCCH with the earlier starting slot may be transmitted and/or the PUCCH with the later starting slot may not be transmitted; and/or, if the plurality of PUCCHs to be transmitted do not include the UCI type with the same priority, the PUCCH including the UCI type with the higher priority may be transmitted and/or the PUCCH including the UCI type with the lower priority may not be transmitted. Of course, the embodiments of the present application are not limited to this. For example, the PUCCH to be transmitted and/or the PUCCH(s) not to be transmitted may be selected from the plurality of PUCCHs to be transmitted based on the starting symbol and/or duration of the PUCCH.

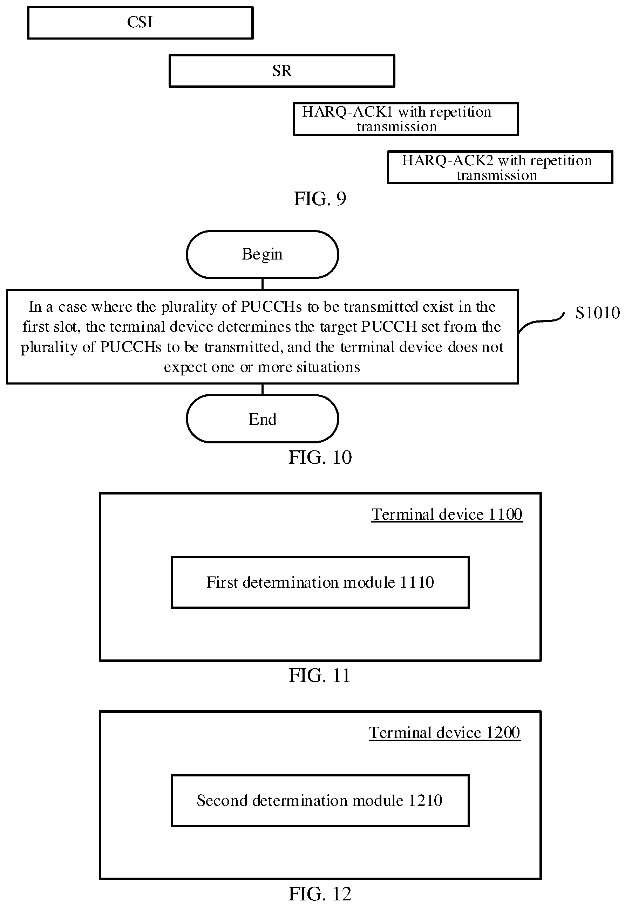

For a case that the terminal device or the network device directly determines the target PUCCH set from the plurality of PUCCHs to be transmitted, in some embodiments, any one PUCCH in the plurality of PUCCHs to be transmitted may overlap with at least one remaining PUCCH in the plurality of PUCCHs to be transmitted except the any one PUCCH. In this case, the PUCCH to be transmitted and/or the PUCCH(s) not to be transmitted may be determined from the plurality of PUCCHs to be transmitted based on the priority of the UCI type included in the PUCCH or based on the starting slot of the PUCCH. An example is provided below in conjunction with FIG. 9. As shown in FIG. 9, 4 PUCCHs to be transmitted are included in the first slot, where HARQ-ACK1 and HARQ-ACK2 are PUCCHs with repetition transmission, the starting slot of the HARQ-ACK2 is earlier than the starting slot of the HARQ-ACK1, and CSI and SR are PUCCHs with single transmission. In this case, any one PUCCH in the four PUCCHs may overlap with at least one remaining PUCCH in the four PUCCHs except the any one PUCCH. Therefore, the plurality of PUCCHs to be transmitted may be regarded as a whole, and in this case, the HARQ-ACK2 with the highest priority may be selected for transmission, and the remaining CSI, SR and HARQ-ACK1 are not transmitted.

In some other embodiments, any one remaining PUCCH in the plurality of PUCCHs to be transmitted except the at least two PUCCHs with repetition transmission may overlap with at least one PUCCH in the at least two PUCCHs with repetition transmission. In other words, the plurality of PUCCHs to be transmitted only include the at least two PUCCHs with repetition transmission and the PUCCH that overlaps with at least one of the at least two PUCCHs with repetition transmission. In this case, the PUCCH to be transmitted and/or the PUCCH(s) not to be transmitted may be selected from the plurality of PUCCHs to be transmitted based on the priority of the UCI type included in the PUCCH or based on the starting slot of the PUCCH. Continuing with FIG. 9 as an example, since the CSI does not overlap with both the HARQ-ACK1 and the HARQ-ACK2, the plurality of PUCCHs to be transmitted only include the HARQ-ACK1, the HARQ-ACK2 and the SR, which are in a total of 3 PUCCHs. In this case, the HARQ-ACK2 with the highest priority may be selected for transmission, and the remaining SR and HARQ-ACK1 are not transmitted. In addition, since the CSI and HARQ-ACK2 do not overlap, the CSI is also be transmitted.

The PUCCH to be transmitted and/or the PUCCH(s) not to be transmitted are determined directly from the plurality of PUCCHs to be transmitted, and the processing method is relatively simple.

The method of embodiment 1 is introduced below with reference to several specific examples.

Example 1 (in which the first PUCCH is selected based on the priority of the PUCCH)

There are N PUCCHs to be transmitted in the first slot, and the N PUCCHs include at least two PUCCHs with repetition transmission. Thus, the target PUCCH set may be determined according to the following steps.

In step 1, the N PUCCHs constitute the first PUCCH set. It should be understood that the step 1 is not a necessary step. For example, the step 1 may not be performed during the subsequent cycle execution.

In step 2, the PUCCH with the highest priority is selected from the at least two PUCCHs with repetition transmission as the first PUCCH, where the priority of the PUCCH is determined according to the priority of the UCI type and/or the starting slot of the PUCCH.

In step 3, the first PUCCH and the PUCCH(s) overlapping with the first PUCCH in the N PUCCHs constitute the first PUCCH subset. According to the principles described above, the PUCCH to be transmitted and the PUCCH(s) not to be transmitted are determined, and then the PUCCH(s) not to be transmitted included in the first PUCCH subset is removed from the first PUCCH set.

In step 4, the steps 2 and 3 are repeated (when the first PUCCH is selected in the step 2, except the first PUCCH that has been previously selected and/or the PUCCH that has been determined not to be transmitted, the PUCCH with the highest priority is selected as the new first PUCCH) until there are no PUCCH resources with repetition transmission in the overlapping PUCCH resources in the first PUCCH set, or there are no overlapping PUCCHs in the first PUCCH set, and then the first PUCCH set is determined as the target PUCCH set. It should be understood that the step 4 is not a necessary step. For example, after the step 3 is performed for the first time, if it is determined that the remaining PUCCHs after the PUCCH(s) not to be transmitted are removed from the N PUCCHs meet the first condition, then the target PUCCH may be determined without performing the step 4 (i.e., repeating the steps 2 and 3).

In an example where three PUCCHs to be transmitted are included in the first slot shown in FIG. 4, the CSI, SR, and HARQ-ACK constitute the first PUCCH set (that is, the first PUCCH set includes three PUCCH resources). The PUCCH with the highest priority is selected from the CSI and HARQ-ACK. That is, the HARQ-ACK serves as the first PUCCH. The HARQ-ACK and SR constitute the first PUCCH subset, the SR is discarded according to the second rule described above, and the SR is removed from the first PUCCH set. In this case, there are no overlapping PUCCH resources in the first PUCCH set, and there are no PUCCH resources overlapping with the PUCCHs with repetition transmission (the CSI with repetition transmission and HARQ-ACK with repetition transmission); thus, the execution is stopped, and the final target PUCCH set includes {CSI with repetition transmission, HARQ-ACK with repetition transmission}.

Example 2 (in which the first PUCCH is selected based on the starting symbol of the PUCCH)

There are N PUCCHs to be transmitted in the first slot, and the N PUCCHs include at least two PUCCHs with repetition transmission. Thus, the target PUCCH set may be determined according to the following steps.

In step 1, the N PUCCHs constitute the first PUCCH set. It should be understood that the step 1 is not a necessary step. For example, the step 1 may not be performed during the subsequent cycle execution.

In step 2, the PUCCH with the earliest starting symbol is selected from the at least two PUCCHs with repetition transmission as the first PUCCH. If there are at least two PUCCHs with the same starting symbol, the PUCCH with the longer duration is selected as the first PUCCH; and if the starting symbol is the same and duration is the same, any one PUCCH is selected as the first PUCCH.

In step 3, the first PUCCH and the PUCCH(s) overlapping with the first PUCCH in the N PUCCHs constitute the first PUCCH subset. According to the principles described above, the PUCCH to be transmitted and the PUCCH(s) not to be transmitted are determined, and then the PUCCH(s) not to be transmitted included in the first PUCCH subset is removed from the first PUCCH set.

In step 4, the steps 2 and 3 are repeated (when the first PUCCH is selected in the step 2, except the first PUCCH that has been previously selected and/or the PUCCH that has been determined not to be transmitted, the PUCCH with the earliest starting symbol is selected as the new first PUCCH) until there are no PUCCH resources with repetition transmission in the overlapping PUCCH resources in the first PUCCH set, or there are no overlapping PUCCHs in the first PUCCH set, and then the first PUCCH set is determined as the target PUCCH set. It should be understood that the step 4 is not a necessary step. For example, after the step 3 is performed for the first time, if it is determined that the remaining PUCCHs after the PUCCH(s) not to be transmitted are removed from the N PUCCHs meet the first condition, then the target PUCCH may be determined without performing the step 4 (i.e., repeating the steps 2 and 3).

In an example where three PUCCHs to be transmitted are included in the first slot shown in FIG. 4, the CSI, SR, and HARQ-ACK constitute the first PUCCH set (that is, the first PUCCH set includes three PUCCH resources). The PUCCH with the earliest starting symbol is selected from the CSI and HARQ-ACK. That is, the CSI serves as the first PUCCH. The CSI and SR constitute the first PUCCH subset, the CSI is discarded according to the second rule described above, and the CSI is removed from the first PUCCH set. There is still the PUCCH resource (SR) in the first PUCCH set that overlap with the PUCCH with repetition transmission (HARQ-ACK). The PUCCH with the earliest starting symbol is selected from the remaining PUCCH resources with repetition transmission except the CSI, which is the HARQ-ACK. The HARQ-ACK serves as the first PUCCH, and the HARQ-ACK and SR constitute the first PUCCH subset. The SR is discarded, and is removed from the first PUCCH set. In this case, there are no overlapping PUCCH resources in the first PUCCH set and no PUCCH resources overlapping with the PUCCH with repetition transmission, the execution is stopped, and the target PUCCH set finally determined only includes { HARQ-ACK with repetition transmission}.

Embodiment 2

FIG. 10 is a schematic flowchart of a wireless communication method provided in yet another embodiment of the present application. The method shown in FIG. 10 may be performed by the terminal device. The terminal device may be, for example, the terminal device 120 in FIG. 1. The method shown in FIG. 10 may include step S1010, which will be described in detail below.

In step S1010, in a case that the plurality of PUCCHs to be transmitted exist in the first slot, the terminal device determines the target PUCCH set from the plurality of PUCCHs to be transmitted. The terminal device does not expect one or more situations. That is, the network device does not configure the plurality of PUCCHs to be transmitted as the one or more situations. The one or more situations that the terminal device does not expect will be described below.

In situation one, the terminal device does not expect that the plurality of PUCCHs to be transmitted include the at least two PUCCHs with repetition transmission. That is, the terminal device does not expect to be scheduled or configured with the at least two PUCCH resources with repetition transmission in the first slot. That is, there are no PUCCHs with repetition transmission to be transmitted in the first slot, or there is at most one PUCCH with repetition transmission to be transmitted in the first slot.

In situation two, the terminal device does not expect that the plurality of PUCCHs to be transmitted include the first PUCCH, the second PUCCH and the third PUCCH, the first PUCCH and the second PUCCH are PUCCHs with repetition transmission, the first PUCCH and the second PUCCH do not overlap, the third PUCCH overlaps with the first PUCCH and the second PUCCH, and the priority of the third PUCCH is between the priority of the first PUCCH and the priority of the second PUCCH. In some embodiments, the terminal device does not expect to be scheduled or configured as the situation shown in FIG. 4 described above; in this example, the first PUCCH and the second PUCCH are CSI with repetition transmission and HARQ-ACK with repetition transmission, respectively, and the third PUCCH is SR with single transmission.

In the situation two, the terminal device may be scheduled or configured with at least two PUCCH resources with repetition transmission, but the at least two PUCCH resources with repetition transmission do not overlap. In some embodiments, in the case that the terminal device is configured to have the at least two PUCCH resources with repetition transmission that do not overlap, the at least two PUCCH resources with repetition transmission may carry the same UCI type, which includes HARQ-ACK.

In situation three, the terminal device does not expect that the plurality of PUCCHs to be transmitted include the first PUCCH, the second PUCCH and the third PUCCH, the first PUCCH and the second PUCCH are PUCCHs with repetition transmission, the first PUCCH overlaps with the second PUCCH, the priority of the first PUCCH is lower than the priority of the second PUCCH, the first PUCCH overlaps with the third PUCCH, and the priority of the third PUCCH is lower than the first PUCCH. In some embodiments, the terminal device does not expect to be scheduled or configured as the situation shown in FIG. 5 described above; in this example, the first PUCCH is HARQ-ACK1 with repetition transmission, the second PUCCH is HARQ-ACK2 with repetition transmission, and the third PUCCH is SR (or CSI) with single transmission.

In the situation three, the terminal device may be scheduled or configured with at least two PUCCH resources with repetition transmission, and the at least two PUCCH resources with repetition transmission may overlap.

In some embodiments, the priorities of the plurality of PUCCHs to be transmitted may be determined based on one or more of the following information: priorities of the UCI types carried by the plurality of PUCCHs to be transmitted; the starting slots of the plurality of PUCCHs to be transmitted; the starting symbols of the plurality of PUCCHs to be transmitted; and the duration of the plurality of PUCCHs to be transmitted.

As an implementation, in the case that the priorities of the plurality of PUCCHs to be transmitted are determined according to the priorities of the UCI types carried by the plurality of PUCCHs to be transmitted, if the plurality of PUCCHs to be transmitted include a plurality of target PUCCHs, and the priorities of the UCI types included in the plurality of target PUCCHs are the same, then the priorities of the plurality of target PUCCHs are determined according to the starting slots of the plurality of target PUCCHs. For example, the plurality of target PUCCHs include a first target PUCCH and a second target PUCCH, the starting slot of the first target PUCCH is the second slot, the starting slot of the second target PUCCH is the third slot, and the second slot is earlier than the third slot, then the priority of the first target PUCCH is higher than the priority of the second target PUCCH.

As another implementation, the priorities of the plurality of PUCCHs to be transmitted are determined according to the starting symbols of the plurality of PUCCHs to be transmitted. If the plurality of PUCCHs to be transmitted include the plurality of target PUCCHs with the same starting symbol, then the priorities of the plurality of target PUCCHs are determined according to the duration of the plurality of target PUCCHs. For example, the plurality of target PUCCHs include the first target PUCCH and the second target PUCCH, the duration of the first target PUCCH is a first time, the duration of the second target PUCCH is a second time, and the first time is longer than the second time, then the priority of the first target PUCCH is higher than the priority of the second target PUCCH.

In some embodiments, if the PUCCHs to be transmitted by the terminal device in the first slot include one or more situations not expected by the terminal device, the terminal device may determine the target PUCCH set in the first slot according to any method in the Embodiment 1 in the present application described above, so as to transmit part or all of the PUCCHs in the target PUCCH set in the first slot. For example, the first PUCCH in the PUCCHs to be transmitted is determined according to the first rule, or the PUCCH to be transmitted and/or the PUCCH(s) not to be transmitted are determined according to the second rule. Correspondingly, if the network device side is configured with one or more situations that the terminal device does not expect, the network device may determine the target PUCCH set in the first slot according to any method in the Embodiment 1 in the present application described above, so as to transmit part or all of the PUCCHs in the target PUCCH set in the first slot.

The method provided in the Embodiment 2 is used to handle the conflict among the plurality of PUCCHs to be transmitted, the terminal device does not need to handle complex situations, and the implementation is simple.

The method embodiments of the present application are described above in detail in conjunction with FIGS. 1 to 10, and the device embodiments of the present application are described below in detail in conjunction with FIGS. 11 to 15. It should be understood that the description of the method embodiments corresponds to the description of the device embodiments, and therefore, for parts that are not described in detail, reference may be made to the previous method embodiments.

FIG. 11 is a schematic diagram of a structure of a terminal device provided in an embodiment of the present application. The terminal device 1100 shown in FIG. 11 includes a first determination module 1110.

The first determination module 1110 may be configured to determine a target PUCCH set from a plurality of PUCCHs to be transmitted in a case that the plurality of PUCCHs to be transmitted exist in a first slot, and the plurality of PUCCHs to be transmitted include at least two PUCCHs with repetition transmission. PUCCHs in the target PUCCH set meet a first condition, and the first condition includes that: if overlapping PUCCHs exist, at least two PUCCHs with repetition transmission are not included in the overlapping PUCCHs; or no overlapping PUCCHs exist.

In some embodiments, determining the target PUCCH set from the plurality of PUCCHs to be transmitted includes: determining a first PUCCH from a first PUCCH set according to a first rule; determining the target PUCCH set from the plurality of PUCCHs to be transmitted according to the first PUCCH. The first PUCCH set includes part or all of the at least two PUCCHs with repetition transmission, and the first PUCCH is a PUCCH with repetition transmission.

In some embodiments, the first rule includes one or more of the following: determining the first PUCCH based on a priority of a UCI type included in the PUCCH, the first PUCCH being a PUCCH including a UCI type with a highest priority in the first PUCCH set; determining the first PUCCH based on a starting slot of the PUCCH, the first PUCCH being a PUCCH with the earliest starting slot in the first PUCCH set; determining the first PUCCH based on a starting symbol of the PUCCH, the first PUCCH being a PUCCH with the earliest starting symbol in the first PUCCH set; and determining the first PUCCH based on duration of the PUCCH, the first PUCCH being a PUCCH with longest duration in the first PUCCH set.

In some embodiments, determining the target PUCCH set from the plurality of PUCCHs to be transmitted based on the first PUCCH, includes: determining a PUCCH to be transmitted and/or PUCCH(s) not to be transmitted from a first PUCCH subset based on a second rule. The first PUCCH subset consists of the first PUCCH and PUCCH(s) overlapping with the first PUCCH.

In some embodiments, determining the target PUCCH set from the plurality of PUCCHs to be transmitted based on the first PUCCH includes: determining the target PUCCH set based on the PUCCH to be transmitted and/or the PUCCH(s) not to be transmitted, the plurality of PUCCHs to be transmitted, and the first condition.

In some embodiments, determining the target PUCCH set based on the PUCCH to be transmitted and/or the PUCCH(s) not to be transmitted, the plurality of PUCCHs to be transmitted, and the first condition, includes: if remaining PUCCHs after the terminal device removes the PUCCH(s) not to be transmitted from the plurality of PUCCHs to be transmitted meet the first condition, then making the remaining PUCCHs constitute the target PUCCH set.

In some embodiments, the second rule includes at least one of the following: that if any one PUCCH in a second PUCCH subset includes a UCI type with the same priority as that of the first PUCCH, the terminal device transmits a PUCCH with an earlier starting slot, and/or does not transmit a PUCCH with a later starting slot; and that if any one PUCCH in the second PUCCH subset does not include the UCI type with the same priority as that of the first PUCCH, the terminal device transmits a PUCCH including a UCI type with higher priority, and/or does not transmit a PUCCH including a UCI type with lower priority. The second PUCCH subset is composed of PUCCHs overlapping with the first PUCCH.

In some embodiments, if the at least two PUCCHs with repetition transmission include a plurality of second PUCCHs with a same starting symbol, then the terminal device selects a PUCCH with the longest duration from the plurality of second PUCCHs as the first PUCCH.

In some embodiments, if the at least two PUCCHs with repetition transmission include a plurality of third PUCCHs including a UCI type with the same priority, then the terminal device selects a PUCCH with the earliest starting slot from the plurality of third PUCCHs as the first PUCCH.

In some embodiments, determining the target PUCCH set from the plurality of PUCCHs to be transmitted, includes at least one of the following: selecting the PUCCH to be transmitted and/or the PUCCH(s) not to be transmitted from the plurality of PUCCHs to be transmitted based on the priority of the UCI type included in the PUCCH; and selecting the PUCCH to be transmitted and/or the PUCCH(s) not to be transmitted from the plurality of PUCCHs to be transmitted based on the starting slot of the PUCCH.

In some embodiments, any one PUCCH in the plurality of PUCCHs to be transmitted overlaps with at least one remaining PUCCH in the plurality of PUCCHs to be transmitted except the any one PUCCH.

In some embodiments, any one remaining PUCCH in the plurality of PUCCHs to be transmitted except the at least two PUCCHs with repetition transmission, overlaps with at least one PUCCH of the at least two PUCCHs with repetition transmission.

In some embodiments, determining the target PUCCH set from the plurality of PUCCHs to be transmitted

includes at least one of the following: if the plurality of PUCCHs to be transmitted include the UCI type with the same priority, transmitting, by the terminal device, the PUCCH with the earlier starting slot, and/or not transmitting, by the terminal device, the PUCCH with the later starting slot; and if the plurality of PUCCHs to be transmitted do not include the UCI type with the same priority, transmitting, by the terminal device, the PUCCH including the UCI type with the higher priority, and/or not transmitting, by the terminal device, the PUCCH including the UCI type with the lower priority.

In some embodiments, the UCI type included in the at least two PUCCHs with repetition transmission includes one or more of the following: hybrid automatic repeat request acknowledgement (HARQ-ACK), scheduling request (SR), higher priority channel-state information (CSI), and lower priority CSI, where the priority of HARQ-ACK is higher than the priority of SR, the priority of SR is higher than the priority of higher priority CSI, and the priority of higher priority CSI is higher than the priority of lower priority CSI.

In some embodiments, the terminal device provided in the embodiment may further include a first transmitting module, and the first transmitting module is configured to transmit at least one PUCCH in the target PUCCH set.

FIG. 12 is a schematic diagram of a structure of a terminal device provided in another embodiment of the present application. The terminal device 1200 shown in FIG. 12 includes a second determination module 1210.

The second determination module 1210 may be configured to determine a target PUCCH set from a plurality of PUCCHs to be transmitted in a case that the plurality of PUCCHs to be transmitted exist in the first slot. The terminal device does not expect one or more of the following situations: that the plurality of PUCCHs to be transmitted include at least two PUCCHs with repetition transmission; that the plurality of PUCCHs to be transmitted include a first PUCCH, a second PUCCH and a third PUCCH, the first PUCCH and the second PUCCH are PUCCHs with repetition transmission, the first PUCCH does not overlap with the second PUCCH, the third PUCCH overlaps with the first PUCCH and the second PUCCH, and a priority of the third PUCCH is between a priority of the first PUCCH and a priority of the second PUCCH; and that the plurality of PUCCHs to be transmitted include the first PUCCH, the second PUCCH and the third PUCCH, the first PUCCH and the second PUCCH are PUCCHs with repetition transmission, the first PUCCH overlaps with the second PUCCH, the priority of the first PUCCH is lower than the priority of the second PUCCH, the first PUCCH overlaps with the third PUCCH, and the priority of the third PUCCH is lower than the priority of the first PUCCH.

In some embodiments, priorities of the plurality of PUCCHs to be transmitted are determined according to one or more of the following information: priorities of the UCI types carried by the plurality of PUCCHs to be transmitted; the starting slots of the plurality of PUCCHs to be transmitted; the starting symbols of the plurality of PUCCHs to be transmitted; and the duration of the plurality of PUCCHs to be transmitted.

In some embodiments, in a case that the priorities of the plurality of PUCCHs to be transmitted are determined according to the priorities of the UCI types carried by the multiple PUCCHs to be transmitted, if the plurality of PUCCHs to be transmitted include a plurality of target PUCCHs, and the plurality of target PUCCHs include the UCI type with the same priority, then priorities of the plurality of target PUCCHs are determined according to starting slots of the plurality of target PUCCHs.

In some embodiments, the plurality of target PUCCHs include a first target PUCCH and a second target PUCCH, the starting slot of the first target PUCCH is a second slot, the starting slot of the second target PUCCH is a third slot, the second slot is earlier than the third slot, and the priority of the first target PUCCH is higher than the priority of the second target PUCCH.

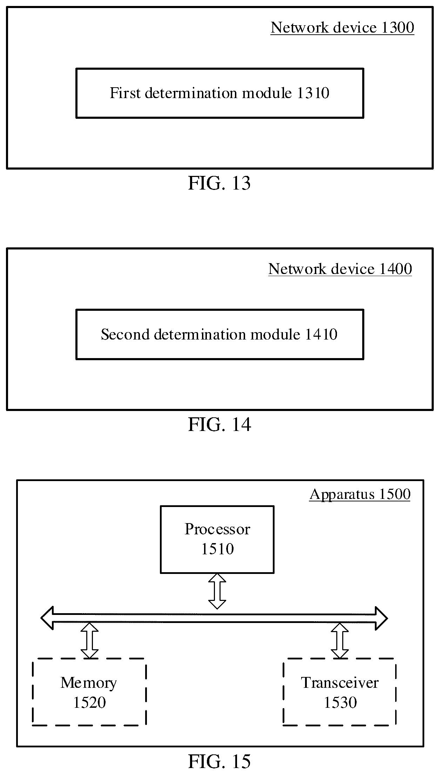

FIG. 13 is a schematic diagram of a structure of a network device provided in an embodiment of the present application. The network device 1300 shown in FIG. 13 includes a first determination module 1310.

The first determination module 1310 may be configured to determine the target PUCCH set from the plurality of PUCCHs to be transmitted in a case that the plurality of PUCCHs to be transmitted exist in the first slot, and the plurality of PUCCHs to be transmitted include at least two PUCCHs with repetition transmission. PUCCHs in the target PUCCH set meet the first condition, and the first condition includes that: if overlapping PUCCHs exist, the at least two PUCCHs with repetition transmission are not included in the overlapping PUCCHs; or no overlapping PUCCHs exist.

In some embodiments, determining the target PUCCH set from the plurality of PUCCHs to be transmitted includes: determining the first PUCCH from the first PUCCH set according to the first rule; and determining the target PUCCH set from the plurality of PUCCHs to be transmitted according to the first PUCCH. The first PUCCH set includes part or all of the at least two PUCCHs with repetition transmission, and the first PUCCH is the PUCCH with repetition transmission.

In some embodiments, the first PUCCH is determined based on the priority of the UCI type included in the PUCCH, and the first PUCCH is the PUCCH including the UCI type with the highest priority in the first PUCCH set; the first PUCCH is determined based on the starting slot of the PUCCH, and the first PUCCH is the PUCCH with the earliest starting slot in the first PUCCH set; the first PUCCH is determined based on the starting symbol of the PUCCH, and the first PUCCH is the PUCCH with the earliest starting symbol in the first PUCCH set; or the first PUCCH is determined based on the duration of the PUCCH, and the first PUCCH is the PUCCH with the longest duration in the first PUCCH set.

In some embodiments, determining the target PUCCH set from the plurality of PUCCHs to be transmitted according to the first PUCCH, includes: determining the PUCCH to be transmitted and/or the PUCCH(s) not to be transmitted from the first PUCCH subset based on the second rule. The first PUCCH subset consists of the first PUCCH and PUCCH(s) overlapping with the first PUCCH.

In some embodiments, determining the target PUCCH set from the plurality of PUCCHs to be transmitted according to the first PUCCH includes: determining the target PUCCH set according to the PUCCH to be transmitted and/or the PUCCH(s) not to be transmitted, the plurality of PUCCHs to be transmitted, and the first condition.

In some embodiments, determining the target PUCCH set according to the PUCCH to be transmitted and/or the PUCCH(s) not to be transmitted, the plurality of PUCCHs to be transmitted, and the first condition, includes: if remaining PUCCHs after the terminal device removes the PUCCH(s) not to be transmitted from the plurality of PUCCHs to be transmitted meet the first condition, making the remaining PUCCHs constitute the target PUCCH set.

In some embodiments, the second rule includes at least one of the following: that if any one PUCCH in the second PUCCH subset includes the UCI type with the same priority as that of the first PUCCH, the terminal device transmits the PUCCH with the earlier starting slot, and/or does not transmit the PUCCH with the later starting slot; and that if any one PUCCH in the second PUCCH subset does not include the UCI type with the same priority as that of the first PUCCH, the terminal device transmits the PUCCH including the UCI type with higher priority, and/or does not transmit the PUCCH including the UCI type with the lower priority. The second PUCCH subset consists of PUCCHs overlapping with the first PUCCH.

In some embodiments, if the at least two PUCCHs with repetition transmission include the plurality of second PUCCHs with the same starting symbol, then the terminal device selects the PUCCH with the longest duration from the plurality of second PUCCHs as the first PUCCH.

In some embodiments, if the at least two PUCCHs with repetition transmission include the plurality of third PUCCHs including the UCI type with the same priority, then the terminal device selects the PUCCH with the earliest starting slot from the plurality of third PUCCHs as the first PUCCH.

In some embodiments, determining the target PUCCH set from the plurality of PUCCHs to be transmitted, includes at least one of the following: selecting the PUCCH to be transmitted and/or the PUCCH(s) not to be transmitted from the plurality of PUCCHs to be transmitted based on the priority of the UCI type included in the PUCCH; and selecting the PUCCH to be transmitted and/or the PUCCH(s) not to be transmitted from the plurality of PUCCHs to be transmitted based on the starting slot of the PUCCH.

In some embodiments, any one PUCCH in the plurality of PUCCHs to be transmitted overlaps with at least one remaining PUCCH in the plurality of PUCCHs to be transmitted except the any one PUCCH.

In some embodiments, any one remaining PUCCH in the plurality of PUCCHs to be transmitted except the at least two PUCCHs with repetition transmission, overlaps with at least one PUCCH of the at least two PUCCHs with repetition transmission.

In some embodiments, determining the target PUCCH set from the plurality of PUCCHs to be transmitted includes at least one of the following: if the plurality of PUCCHs to be transmitted include the UCI type with the same priority, transmitting, by the terminal device, the PUCCH with the earlier starting slot, and/or not transmitting, by the terminal device, the PUCCH with the later starting slot; and if the plurality of PUCCHs to be transmitted do not include the UCI type with the same priority, transmitting, by the terminal device, the PUCCH including the UCI type with the higher priority, and/or not transmitting, by the terminal device, the PUCCH including the UCI type with the lower priority.

In some embodiments, the UCI type included in the at least two PUCCHs with repetition transmission includes one or more of the following: hybrid automatic repeat request acknowledgement (HARQ-ACK), scheduling request (SR), higher priority channel-state information (CSI), and lower priority CSI. The priority of HARQ-ACK is higher than the priority of SR, the priority of SR is higher than the priority of higher priority CSI, and the priority of higher priority CSI is higher than the priority of lower priority CSI.

In some embodiments, the network device provided in the embodiment may further include a first transmitting module, and the first transmitting module is configured to transmit at least one PUCCH in the target PUCCH set.

FIG. 14 is a schematic diagram of a structure of a network device provided in another embodiment of the present application. The network device 1400 shown in FIG. 14 includes a second determination module 1410.

The second determination module 1410 may be configured to determine the target PUCCH set from the plurality of PUCCHs to be transmitted in a case that the plurality of PUCCHs to be transmitted exist in the first slot, where the network device does not configure the plurality of PUCCHs to be transmitted as one or more of the following situations: that the plurality of PUCCHs to be transmitted include the at least two PUCCHs with repetition transmission; that the plurality of PUCCHs to be transmitted include a first PUCCH, a second PUCCH and a third PUCCH, the first PUCCH and the second PUCCH are PUCCHs with repetition transmission, the first PUCCH and the second PUCCH do not overlap, the third PUCCH overlaps with the first PUCCH and the second PUCCH, and a priority of the third PUCCH is between a priority of the first PUCCH and a priority of the second PUCCH; and that the plurality of PUCCHs to be transmitted include the first PUCCH, the second PUCCH and the third PUCCH, the first PUCCH and the second PUCCH are PUCCHs with repetition transmission, the first PUCCH overlaps with the second PUCCH, the priority of the first PUCCH is lower than the priority of the second PUCCH, the first PUCCH overlaps with the third PUCCH, and the priority of the third PUCCH is lower than the priority of the first PUCCH.

In some embodiments, the priorities of the plurality of PUCCHs to be transmitted are determined according to one or more of the following information: priorities of the UCI types carried by the plurality of PUCCHs to be transmitted; the starting slots of the plurality of PUCCHs to be transmitted; the starting symbols of the plurality of PUCCHs to be transmitted; and the duration of the plurality of PUCCHs to be transmitted.

In some embodiments, in a case that the priorities of the plurality of PUCCHs to be transmitted are determined according to the priorities of the UCI types carried by the plurality of PUCCHs to be transmitted, if the plurality of PUCCHs to be transmitted include a plurality of target PUCCHs, and the plurality of target PUCCHs include the UCI type with the same priority, then the priorities of the plurality of target PUCCHs are determined according to the starting slots of the plurality of target PUCCHs.

In some embodiments, the plurality of target PUCCHs include a first target PUCCH and a second target PUCCH, the starting slot of the first target PUCCH is the second slot, the starting slot of the second target PUCCH is the third slot, the second slot is earlier than the third slot, and the priority of the first target PUCCH is higher than the priority of the second target PUCCH.

In some embodiments, the first determination module 1110 in FIG. 11 may refer to a processor 1510 in FIG. 15, the processor 1510 may be configured to determine the target PUCCH set from the plurality of PUCCHs to be transmitted, and the first determination module 1110 may be configured to connect or communicate with a memory 1520 and/or transceiver 1530 in FIG. 15. In some embodiments, the second determination module 1210 in FIG. 12, the first determination module 1310 in FIG. 13, and the second determination module 1410 in FIG. 14 may all refer to the processor 1510 in FIG. 15, which may all connect or communicate with the memory 1520 and/or the transceiver 1530 in FIG 15.

FIG. 15 is a schematic diagram of a structure of a communication apparatus according to the embodiments of the present application. A dashed line in FIG. 15 indicates that a unit or module is optional. The apparatus 1400 may be configured to implement the method described in the above method embodiments. The apparatus 1500 may be a chip, the terminal device or the network device.

The apparatus 1500 may include one or more processors 1510. The processor 1510 may support the apparatus 1500 to implement the method described in the above method embodiments. The processor 1510 may be a general purpose processor or a special purpose processor. For example, the processor may be a central processing unit (CPU). Alternatively, the processor may be any other general purpose processor, a digital signal processor (DSP), an application specific integrated circuit (ASIC), a field programmable gate array (FPGA) or another programmable logic device, a discrete gate or transistor logic device, or a discrete hardware component. The general purpose processor may be a microprocessor, or the processor may be any conventional processor.

The apparatus 1500 may further include one or more memories 1520. The memory 1520 stores a program, the program may be executed by the processor 1510, so as to enable the processor 1510 to perform the method described in the above method embodiments. The memory 1520 may be independent of the processor 1510 or may be integrated into the processor 1510.

The apparatus 1500 may further include a transceiver 1530. The processor 1510 may communicate with other devices or chips through the transceiver 1530. For example, the processor 1510 may perform transmission and reception of data with other devices or chips through the transceiver 1530.

The embodiments of the present application also provide a computer-readable storage medium for storing a program. The computer-readable storage medium may be applied to the terminal or network device provided in the embodiments of the present application, and the program enables the computer to perform the methods performed by the terminal or network device in various embodiments of the present application.

The embodiments of the present application also provide a computer program product. The computer program product includes a program. The computer program product may be applied to the terminal or network device provided in the embodiments of the present application, and the program enables the computer to perform the methods performed by the terminal or network device in various embodiments of the present application.

The embodiments of the present application also provide a computer program. The computer program may be applied to the terminal or network device provided in the embodiments of the present application, and the computer program enables the computer to perform the methods performed by the terminal or network device in various embodiments of the present application.

It should be understood that the terms "system" and "network" may be used interchangeably herein. In addition, the terms used herein are only used to explain the specific embodiments of this application and are not intended to limit this application. The terms "first", "second", "third", "fourth", and the like in the specification, claims and drawings of this application are used to distinguish different objects rather than to describe a specific order. In addition, the terms "include", "comprise", and "have" and any variations thereof, are intended to cover a non-exclusive inclusion.

In the embodiments of the present application, "indicate" mentioned may be a direct indication, may be an indirect indication, or may represent that there is an association relationship. For example, that A indicates B may mean that A directly indicates B, e.g., that B may be obtained through A; or it may mean that A indirectly indicates B, e.g., that A indicates C, and B may be obtained through C; or it may mean that there is an association relationship between A and B.

In the embodiments of the present application, "B corresponding to A" means that B is associated with A, and B may be determined based on A. However, it should also be understood that determining B based on A does not mean determining B based solely on A, and B may also be determined based on A and/or other information.

In the embodiments of the present application, the term "correspond" may mean a direct or indirect correspondence between the two, or an association relationship between the two, or mean a relationship such as indicating and being indicated, or configuring and being configured.

In the embodiments of the present application, "pre-defined" or "pre-configured" may be implemented by pre-storing corresponding codes, tables or other methods that can be used to indicate relevant information in devices (e.g., including a terminal device and a network device). The present application does not limit its specific implementation method. For example, pre-defined may refer to what is defined in a protocol.

In the embodiments of the present application, the "protocol" may refer to a standard protocol in the communication field, for example, it may include an LTE protocol, an NR protocol, and related protocols applied in future communication systems, and the present application does not limit this.

In the embodiments of the present application, the term "and/or" is only a description of an association relationship of associated objects, and indicates that three relationships may exist. For example, A and/or B may mean three situations that: A exists alone, both A and B exist, and B exists alone. Moreover, the character "/" herein generally indicates that the associated objects before and after this character are in an "or" relationship.

In various embodiments of the present application, the magnitude of the serial number of each of the above processes does not mean the order of execution. The order of execution of each process should be determined by its function and internal logic, and should not constitute any limitation on the implementation process of the embodiments of the present application.

In several embodiments provided in the present application, it should be understood that the disclosed systems, apparatuses, and methods may be implemented in other ways. For example, the apparatus/device embodiments described above are only illustrative. For example, the division of the units is only a logical function division. There may be other division methods in actual implementation. For example, multiple units or components may be combined or integrated into another system, or some features may be ignored or not executed. Another point is that the mutual coupling or direct coupling or communication connection shown or discussed may be indirect coupling or communication connection through some interfaces, devices or units, which may be electrical, mechanical or other forms.

The units described as separate components may or may not be physically separated, and the components shown as units may or may not be physical units (that is, these components may be located in one place or may be distributed on multiple network units). Some or all of the units may be selected according to actual needs to achieve the purpose of the solution in the embodiments.

In addition, various functional units in various embodiments of the present application may be integrated into one processing unit, or various units may exist physically separately, or two or more units may be integrated into one unit.

In the above embodiments, all or part of them may be implemented by software, hardware, firmware or any combination thereof. When implemented using software, all or part of the above embodiments may be implemented in the form of a computer program product. The computer program product includes one or more computer instructions. When the computer program instruction(s) are loaded and executed on a computer, the processes or functions described in the embodiments of the present application are generated in whole or in part. The computer may be a general purpose computer, a special purpose computer, a computer network, or any other programmable device. The computer instruction(s) may be stored in a computer-readable storage medium, or transmitted from a computer-readable storage medium to another computer-readable storage medium. For example, the computer instruction(s) may be transmitted from a website, computer, server, or data center to another website, computer, server, or data center via a wired manner (e.g., coaxial cable, optical fiber, or digital subscriber line (DSL)) or a wireless manner (e.g., infrared, wireless, or microwave). The computer-readable storage medium may be any available medium that can be read by a computer or a data storage device such as a server or a data center that includes one or more available medium. The available medium may be a magnetic medium (e.g., a floppy disk, a hard disk, or a magnetic tape), an optical medium (e.g., a digital video disc (DVD)), or a semiconductor medium (e.g., a solid state disk (SSD)).

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

Embodiments of the present application provides a wireless communication method, a terminal device and a network device to ensure that the terminal device and the network device have a consistent understanding of a PUCCH to be transmitted, thereby ensuring the normal transmission of the PUCCH.

In a first clause, a wireless communication method is provided, and the method includes:
determining, by a terminal device, a target physical uplink control channel (PUCCH) set from a plurality of PUCCHs to be transmitted, in a case that the plurality of PUCCHs to be transmitted exist in a first slot, and the plurality of PUCCHs to be transmitted include at least two PUCCHs with repetition transmission, where PUCCHs in the target PUCCH set meet a first condition, and the first condition includes that:
if overlapping PUCCHs exist, the at least two PUCCHs with repetition transmission are not included in the overlapping PUCCHs; or no overlapping PUCCHs exist.

In a second clause, according to the first clause, determining, by the terminal device, the target PUCCH set from the plurality of PUCCHs to be transmitted, includes:

determining, by the terminal device, a first PUCCH from a first PUCCH set according to a first rule; and
determining, by the terminal device, the target PUCCH set from the plurality of PUCCHs to be transmitted according to the first PUCCH;
where the first PUCCH set includes part or all PUCCHs of the at least two PUCCHs with repetition transmission, and the first PUCCH is a PUCCH with repetition transmission.

In a third clause, according to the second clause, the first rule includes one or more of the following:

determining the first PUCCH based on a priority of an uplink control information (UCI) type included in a PUCCH, the first PUCCH being a PUCCH including a UCI type with a highest priority in the first PUCCH set;
determining the first PUCCH based on a starting slot of the PUCCH, the first PUCCH being a PUCCH with an earliest starting slot in the first PUCCH set;
determining the first PUCCH based on a starting symbol of the PUCCH, the first PUCCH being a PUCCH with an earliest starting symbol in the first PUCCH set; and
determining the first PUCCH based on duration of the PUCCH, the first PUCCH being a PUCCH with longest duration in the first PUCCH set.

In a fourth clause, according to the second clause or the third clause, determining, by the terminal device, the target PUCCH set from the plurality of PUCCHs to be transmitted according to the first PUCCH, includes:
determining, by the terminal device, a PUCCH to be transmitted and/or PUCCH(s) not to be transmitted from a first PUCCH subset according to a second rule, where the first PUCCH subset consists of the first PUCCH and PUCCH(s) overlapping with the first PUCCH.

In a fifth clause, according to the fourth clause, determining, by the terminal device, the target PUCCH set from the plurality of PUCCHs to be transmitted according to the first PUCCH, includes: determining, by the terminal device, the target PUCCH set according to the PUCCH to be transmitted and/or the PUCCH(s) not to be transmitted, the plurality of PUCCHs to be transmitted, and the first condition.

In a sixth clause, according to the fifth clause, determining, by the terminal device, the target PUCCH set according to the PUCCH to be transmitted and/or the PUCCH(s) not to be transmitted, the plurality of PUCCHs to be transmitted, and the first condition, includes:
if remaining PUCCHs after the terminal device removes the PUCCH(s) not to be transmitted from the plurality of PUCCHs to be transmitted meet the first condition, making the remaining PUCCHs constitute the target PUCCH set.

In a seventh clause, according to any one of the fourth clause to the sixth clause, the second rule includes at least one of the following:

that if any PUCCH in a second PUCCH subset includes a UCI type with a same priority as that of the first PUCCH, the terminal device transmits a PUCCH with an earlier starting slot, and/or does not transmit PUCCH(s) with a later starting slot; and
that if any PUCCH in the second PUCCH subset does not include a UCI type with the same priority as that of the first PUCCH, the terminal device transmits a PUCCH including a UCI type with a higher priority, and/or does not transmit PUCCH(s) including a UCI type with lower priority;

where the second PUCCH subset consists of PUCCHs overlapping with the first PUCCH.

In an eighth clause, according to any one of the third clause to the seventh clause, if the at least two PUCCHs with repetition transmission include a plurality of second PUCCHs with a same starting symbol, then the terminal device selects a PUCCH with longest duration from the plurality of second PUCCHs as the first PUCCH.

In a ninth clause, according to any one of the third clause to the seventh clause, if the at least two PUCCHs with repetition transmission include a plurality of third PUCCHs including a UCI type with a same priority, then the terminal device selects a PUCCH with an earliest starting slot from the plurality of third PUCCHs as the first PUCCH.

In a tenth clause, according to the first clause, determining, by the terminal device, the target PUCCH set from the plurality of PUCCHs to be transmitted, includes at least one of the following:

selecting a PUCCH to be transmitted and/or PUCCH(s) not to be transmitted from the plurality of PUCCHs to be transmitted based on a priority of a UCI type included in a PUCCH; and
selecting the PUCCH to be transmitted and/or the PUCCH(s) not to be transmitted from the plurality of PUCCHs to be transmitted based on a starting slot of the PUCCH.

In an eleventh clause, according to the tenth clause, any one PUCCH in the plurality of PUCCHs to be transmitted overlaps with at least one remaining PUCCH in the plurality of PUCCHs to be transmitted except the any one PUCCH.

In a twelfth clause, according to the tenth clause, any one remaining PUCCH in the plurality of PUCCHs to be transmitted except the at least two PUCCHs with repetition transmission, overlaps with at least one PUCCH in the at least two PUCCHs with repetition transmission.

In a thirteenth clause, according to any one of the tenth clause to the twelfth clause, determining, by the terminal device, the target PUCCH set from the plurality of PUCCHs to be transmitted, includes at least one of the following:

if the plurality of PUCCHs to be transmitted include a UCI type with a same priority, transmitting, by the terminal device, a PUCCH with an earlier starting slot, and/or not transmitting, by the terminal device, a PUCCH with a later starting slot; and
if the plurality of PUCCHs to be transmitted do not include the UCI type with the same priority, transmitting, by the terminal device, a PUCCH including a UCI type with a higher priority, and/or not transmitting, by the terminal device, a PUCCH including a UCI type with lower priority.

In a fourteenth clause, according to any one of the third clause to the thirteenth clause, a UCI type included in the at least two PUCCHs with repetition transmission includes one or more of the following: a hybrid automatic repeat request acknowledgement (HARQ-ACK), a scheduling request (SR), higher priority channel-state information (CSI), and lower priority CSI, where a priority of the HARQ-ACK is higher than a priority of the SR, the priority of the SR is higher than a priority of the higher priority CSI, and the priority of the higher priority CSI is higher than a priority of the lower priority CSI.

In a fifteenth clause, a wireless communication method is provided, and the method includes: determining, by a terminal device, a target physical uplink control channel (PUCCH) set from a plurality of PUCCHs to be transmitted, in a case that the plurality of PUCCHs to be transmitted exist in a first slot, where the terminal device does not expect one or more of the following situations:

that the plurality of PUCCHs to be transmitted include at least two PUCCHs with repetition transmission;
that the plurality of PUCCHs to be transmitted include a first PUCCH, a second PUCCH, and a third PUCCH, the first PUCCH and the second PUCCH are PUCCHs with repetition transmission, the first PUCCH does not overlap with the second PUCCH, the third PUCCH overlaps with the first PUCCH and the second PUCCH, and a priority of the third PUCCH is between a priority of the first PUCCH and a priority of the second PUCCH; and
that the plurality of PUCCHs to be transmitted include the first PUCCH, the second PUCCH and the third PUCCH, the first PUCCH and the second PUCCH are PUCCHs with repetition transmission, the first PUCCH overlaps with the second PUCCH, the priority of the first PUCCH is lower than the priority of the second PUCCH, the first PUCCH overlaps with the third PUCCH, and the priority of the third PUCCH is lower than the priority of the first PUCCH.

In a sixteenth clause, according to the fifteenth clause, priorities of the plurality of PUCCHs to be transmitted are determined according to one or more of the following information:
priorities of uplink control information (UCI) types carried by the plurality of PUCCHs to be transmitted;

starting slots of the plurality of PUCCHs to be transmitted;
starting symbols of the plurality of PUCCHs to be transmitted; and
duration of the plurality of PUCCHs to be transmitted.

In a seventeenth clause, according to the sixteenth clause, in a case that the priorities of the plurality of PUCCHs to be transmitted are determined according to the priorities of the UCI types carried by the plurality of PUCCHs to be transmitted, if the plurality of PUCCHs to be transmitted include a plurality of target PUCCHs, and the plurality of target PUCCHs include a UCI type with a same priority, then priorities of the plurality of target PUCCHs are determined according to starting slots of the plurality of target PUCCHs.

In an eighteenth clause, according to the seventeenth clause, the plurality of target PUCCHs include a first target PUCCH and a second target PUCCH, a starting slot of the first target PUCCH is a second slot, a starting slot of the second target PUCCH is a third slot, the second slot is earlier than the third slot, and a priority of the first target PUCCH is higher than a priority of the second target PUCCH.

In a nineteenth clause, a wireless communication method is provided, and the method includes: determining, by a network device, a target physical uplink control channel (PUCCH) set from a plurality of PUCCHs to be transmitted, in a case that the plurality of PUCCHs to be transmitted exist in a first slot, and the plurality of PUCCHs to be transmitted include at least two PUCCHs with repetition transmission, where PUCCHs in the target PUCCH set meet a first condition, and the first condition includes that:

if overlapping PUCCHs exist, the at least two PUCCHs with repetition transmission are not included in the overlapping PUCCHs; or no overlapping PUCCHs exist.

In a twentieth clause, according to the nineteenth clause, determining, by the network device, the target PUCCH set from the plurality of PUCCHs to be transmitted, includes:

determining, by the network device, a first PUCCH from a first PUCCH set according to a first rule; and
determining, by the network device, the target PUCCH set from the plurality of PUCCHs to be transmitted according to the first PUCCH;
where the first PUCCH set includes part or all PUCCHs of the at least two PUCCHs with repetition transmission, and the first PUCCH is a PUCCH with repetition transmission.

In a twenty-first clause, according to the twentieth clause, the first rule includes one or more of the following:

determining the first PUCCH based on a priority of an uplink control information (UCI) type included in a PUCCH, the first PUCCH being a PUCCH including a UCI type with a highest priority in the first PUCCH set;
determining the first PUCCH based on a starting slot of the PUCCH, the first PUCCH being a PUCCH with an earliest starting slot in the first PUCCH set;
determining the first PUCCH based on a starting symbol of the PUCCH, the first PUCCH being a PUCCH with an earliest starting symbol in the first PUCCH set; and
determining the first PUCCH based on duration of the PUCCH, the first PUCCH being a PUCCH with longest duration in the first PUCCH set.

In a twenty-second clause, according to the twentieth clause or the twenty-first clause, determining, by the network device, the target PUCCH set from the plurality of PUCCHs to be transmitted according to the first PUCCH, includes:
determining, by the network device, a PUCCH to be transmitted and/or PUCCH(s) not to be transmitted from a first PUCCH subset according to a second rule, where the first PUCCH subset consists of the first PUCCH and PUCCH(s) overlapping with the first PUCCH.

In a twenty-third clause, according to the twenty-second clause, determining, by the network device, the target PUCCH set from the plurality of PUCCHs to be transmitted according to the first PUCCH, includes:
determining, by the network device, the target PUCCH set according to the PUCCH to be transmitted and/or the PUCCH(s) not to be transmitted, the plurality of PUCCHs to be transmitted, and the first condition.

In a twenty-fourth clause, according to the twenty-third clause, determining, by the network device, the target PUCCH set according to the PUCCH to be transmitted and/or the PUCCH(s) not to be transmitted, the plurality of PUCCHs to be transmitted, and the first condition, includes:
if remaining PUCCHs after the network device removes the PUCCH(s) not to be transmitted from the plurality of PUCCHs to be transmitted meet the first condition, making the remaining PUCCHs constitute the target PUCCH set.

In a twenty-fifth clause, according to any one of the twenty-second clause to the twenty-fourth clause, the second rule includes at least one of the following:

that if any one PUCCH in a second PUCCH subset includes a UCI type with a same priority as that of the first PUCCH, the network device transmits a PUCCH with an earlier starting slot, and/or does not transmit a PUCCH with a later starting slot; and
that if any one PUCCH in the second PUCCH subset do not include the UCI type with the same priority as that of the first PUCCH, the network device transmits a PUCCH including a UCI type with a higher priority, and/or does not transmit a PUCCH including a UCI type with lower priority;
where the second PUCCH subset consists of PUCCHs overlapping with the first PUCCH.

In a twenty-sixth clause, according to any one of the twenty-first clause to the twenty-fifth clause, if the at least two PUCCHs with repetition transmission include a plurality of second PUCCHs with a same starting symbol, then the network device selects a PUCCH with longest duration from the plurality of second PUCCHs as the first PUCCH.

In a twenty-seventh clause, according to any one of the twenty-first clause to the twenty-fifth clause, if the at least two PUCCHs with repetition transmission include a plurality of third PUCCHs including a UCI type with a same priority, then the network device selects a PUCCH with an earliest starting slot from the plurality of third PUCCHs as the first PUCCH.

In a twenty-eighth clause, according to the nineteenth clause, determining, by the network device, the target PUCCH set from the plurality of PUCCHs to be transmitted, includes at least one of the following:

selecting a PUCCH to be transmitted and/or PUCCH(s) not to be transmitted from the plurality of PUCCHs to be transmitted based on a priority of a UCI type included in a PUCCH; and

selecting the PUCCH to be transmitted and/or the PUCCH(s) not to be transmitted from the plurality of PUCCHs to be transmitted based on a starting slot of the PUCCH.

In a twenty-ninth clause, according to the twenty-eighth clause, any one PUCCH in the plurality of PUCCHs to be transmitted overlaps with at least one remaining PUCCH in the plurality o PUCCHs to be transmitted except the any one PUCCH.

In a thirtieth clause, according to the twenty-eighth clause, any one remaining PUCCH in the plurality of PUCCHs to be transmitted except the at least two PUCCHs with repetition transmission, overlaps with at least one PUCCH of the at least two PUCCHs with repetition transmission.

In a thirty-first clause, according to any one of the twenty-eighth clause to the thirtieth clause, determining, by the network device, the target PUCCH set from the plurality of PUCCHs to be transmitted, includes at least one of the following:

if the plurality of PUCCHs to be transmitted include a UCI type with a same priority, transmitting, by the network device, a PUCCH with an earlier starting slot, and/or not transmitting, by the terminal device, a PUCCH with a later starting slot; and

if the plurality of PUCCHs to be transmitted do not include the UCI type with the same priority, transmitting, by the network device, a PUCCH including a UCI type with a higher priority, and/or not transmitting, by the network device, a PUCCH including a UCI type with lower priority.

In a thirty-second clause, according to any one of the twenty-first clause to the thirty-first clause, a UCI type included in the at least two PUCCHs with repetition transmission includes one or more of the following: a hybrid automatic repeat request acknowledgement (HARQ-ACK), a scheduling request (SR), higher priority channel-state information (CSI), and lower priority CSI, where a priority of the HARQ-ACK is higher than a priority of the SR, the priority of the SR is higher than a priority of the higher priority CSI, and the priority of the higher priority CSI is higher than a priority of the lower priority CSI.

In a thirty-third clause, a wireless communication method is provided, and the method include:

determining, by a network device, a target physical uplink control channel (PUCCH) set from a plurality of PUCCHs to be transmitted, in a case that the plurality of PUCCHs to be transmitted exist in a first slot, where the network device does not configure the plurality of PUCCHs to be transmitted as one or more of the following situations:

that the plurality of PUCCHs to be transmitted include at least two PUCCHs with repetition transmission;

that the plurality of PUCCHs to be transmitted include a first PUCCH, a second PUCCH, and a third PUCCH, the first PUCCH and the second PUCCH are PUCCHs with repetition transmission, the first PUCCH does not overlap with the second PUCCH, the third PUCCH overlaps with the first PUCCH and the second PUCCH, and a priority of the third PUCCH is between a priority of the first PUCCH and a priority of the second PUCCH; and

that the plurality of PUCCHs to be transmitted include the first PUCCH, the second PUCCH and the third PUCCH, the first PUCCH and the second PUCCH are PUCCHs with repetition transmission, the first PUCCH overlaps with the second PUCCH, the priority of the first PUCCH is lower than the priority of the second PUCCH, the first PUCCH overlaps with the third PUCCH, and the priority of the third PUCCH is lower than the priority of the first PUCCH.

In a thirty-fourth clause, according to the thirty-third clause, priorities of the plurality of PUCCHs to be transmitted are determined according to one or more of the following information:

priorities of uplink control information (UCI) types carried by the plurality of PUCCHs to be transmitted;

starting slots of the plurality of PUCCHs to be transmitted;

starting symbols of the plurality of PUCCHs to be transmitted; and

duration of the plurality of PUCCHs to be transmitted.

In a thirty-fifth clause, according to the thirty-fourth clause, in a case that the priorities of the plurality of PUCCHs to be transmitted are determined according to the priorities of the UCI types carried by the plurality of PUCCHs to be transmitted, if the plurality of PUCCHs to be transmitted include a plurality of target PUCCHs, and the plurality of target PUCCHs include a UCI type with a same priority, then priorities of the plurality of target PUCCHs are determined according to starting slots of the plurality of target PUCCHs.

In a thirty-sixth clause, according to the thirty-fifth clause, the plurality of target PUCCHs include a first target PUCCH and a second target PUCCH, a starting slot of the first target PUCCH is a second slot, a starting slot of the second target PUCCH is a third slot, the second slot is earlier than the third slot, and a priority of the first target PUCCH is higher than a priority of the second target PUCCH.

In a thirty-seventh clause, a terminal device is provided and includes:

a first determination module, configured to determine a target physical uplink control channel (PUCCH) set from a plurality of PUCCHs to be transmitted in a case that the plurality of PUCCHs to be transmitted exist in a first slot, and the plurality of PUCCHs to be transmitted include at least two PUCCHs with repetition transmission, where PUCCHs of the target PUCCH set meet a first condition, and the first condition includes that:

if overlapping PUCCHs exist, the at least two PUCCHs with repetition transmission are not included in the overlapping PUCCHs; or no overlapping PUCCHs exist.

In a thirty-eighth clause, according to the thirty-seventh clause, determining the target PUCCH set from the plurality of PUCCHs to be transmitted includes:

determining a first PUCCH from a first PUCCH set according to a first rule; and

determining the target PUCCH set from the plurality of PUCCHs to be transmitted according to the first PUCCH;

where the first PUCCH set includes part or all PUCCHs of the at least two PUCCHs with repetition transmission, and the first PUCCH is a PUCCH with repetition transmission.

In a thirty-ninth clause, according to the thirty-eighth clause, the first rule includes one or more of the following:

determining the first PUCCH based on a priority of an uplink control information (UCI) type included in a PUCCH, the first PUCCH being a PUCCH including a UCI type with a highest priority in the first PUCCH set;

determining the first PUCCH based on a starting slot of the PUCCH, the first PUCCH being a PUCCH with an earliest starting slot in the first PUCCH set;

determining the first PUCCH based on a starting symbol of the PUCCH, the first PUCCH being a PUCCH with an earliest starting symbol in the first PUCCH set; and

determining the first PUCCH based on duration of the PUCCH, the first PUCCH being a PUCCH with longest duration in the first PUCCH set.

In a fortieth clause, according to the thirty-seventh clause, determining the target PUCCH set from the plurality of PUCCHs to be transmitted includes at least one of the following:

selecting a PUCCH to be transmitted and/or PUCCH(s) not to be transmitted from the plurality of PUCCHs to be transmitted based on a priority of a UCI type included in a PUCCH; and

selecting the PUCCH to be transmitted and/or the PUCCH(s) not to be transmitted from the plurality of PUCCHs to be transmitted based on a starting slot of the PUCCH.

In a forty-first clause, according to the fortieth clause, any one PUCCH in the plurality of PUCCHs to be transmitted overlaps with at least one remaining PUCCH in the plurality of PUCCHs to be transmitted except the any one PUCCH.

In a forty-second clause, according to the fortieth clause, any one remaining PUCCH in the plurality of PUCCHs to be transmitted except the at least two PUCCHs with repetition transmission, overlaps with at least one PUCCH of the at least two PUCCHs with repetition transmission.

In a forty-third clause, a terminal device is provided and includes:

a second determination module, configured to determine a target physical uplink control channel (PUCCH) set from a plurality of PUCCHs to be transmitted in a case that the plurality of PUCCHs to be transmitted exist in a first slot, where the terminal device does not expect one or more of the following situations:

that the plurality of PUCCHs to be transmitted include at least two PUCCHs with repetition transmission;

that the plurality of PUCCHs to be transmitted include a first PUCCH, a second PUCCH, and a third PUCCH, the first PUCCH and the second PUCCH are PUCCHs with repetition transmission, the first PUCCH does not overlap with the second PUCCH, the third PUCCH overlaps with the first PUCCH and the second PUCCH, and a priority of the third PUCCH is between a priority of the first PUCCH and a priority of the second PUCCH; and

that the plurality of PUCCHs to be transmitted include the first PUCCH, the second PUCCH, and the third PUCCH, the first PUCCH and the second PUCCH are PUCCHs with repetition transmission, the first PUCCH overlaps with the second PUCCH, the priority of the first PUCCH is lower than the priority of the second PUCCH, the first PUCCH overlaps with the third PUCCH, and the priority of the third PUCCH is lower than the priority of the first PUCCH.

In a forty-fourth clause, according to the forty-third clause, priorities of the plurality of PUCCHs to be transmitted are determined according to one or more of the following information:

priorities of uplink control information (UCI) types carried by the plurality of PUCCHs to be transmitted;
starting slots of the plurality of PUCCHs to be transmitted;
starting symbols of the plurality of PUCCHs to be transmitted; and
duration of the plurality of PUCCHs to be transmitted.

In a forty-fifth clause, a network device is provided and includes:
a first determination module, configured to determine a target physical uplink control channel (PUCCH) set from a plurality of PUCCHs to be transmitted in a case that the plurality of PUCCHs to be transmitted exist in a first slot, and the plurality of PUCCHs to be transmitted include at least two PUCCHs with repetition transmission, where PUCCHs in the target PUCCH set meet a first condition, and the first condition includes:
if overlapping PUCCHs exist, the at least two PUCCHs with repetition transmission are not included in the overlapping PUCCHs; or no overlapping PUCCHs exist.

In a forty-sixth clause, according to the forty-fifth clause, determining the target PUCCH set from the plurality of PUCCHs to be transmitted includes:

determining a first PUCCH from a first PUCCH set according to a first rule; and
determining the target PUCCH set from the plurality of PUCCHs to be transmitted according to the first PUCCH;
where the first PUCCH set includes part or all PUCCHs of the at least two PUCCHs with repetition transmission, and the first PUCCH is a PUCCH with repetition transmission.

In a forty-seventh clause, according to the forty-sixth clause, the first rule includes one or more of the following:

determining the first PUCCH based on a priority of an uplink control information (UCI) type included in a PUCCH, the first PUCCH being a PUCCH including a UCI type with a highest priority in the first PUCCH set;
determining the first PUCCH based on a starting slot of the PUCCH, the first PUCCH being a PUCCH with an earliest starting slot in the first PUCCH set;
determining the first PUCCH based on a starting symbol of the PUCCH, the first PUCCH being a PUCCH with an earliest starting symbol in the first PUCCH set; and
determining the first PUCCH based on duration of the PUCCH, the first PUCCH being a PUCCH with longest duration in the first PUCCH set.

In a forty-eighth clause, according to the forty-fifth clause, determining the target PUCCH set from the plurality of PUCCHs to be transmitted, includes at least one of the following:

selecting a PUCCH to be transmitted and/or PUCCH(s) not to be transmitted from the plurality of PUCCHs to be transmitted based on a priority of a UCI type included in a PUCCH; and
selecting the PUCCH to be transmitted and/or the PUCCH(s) not to be transmitted from the plurality of PUCCHs to be transmitted based on a starting slot of the PUCCH.

In a forty-ninth clause, according to the forty-eighth clause, any one PUCCH in the plurality of PUCCHs to be transmitted overlaps with at least one remaining PUCCH in the plurality of PUCCHs to be transmitted except the any one PUCCH.

In a fiftieth clause, according to the forty-eighth clause, any one remaining PUCCH in the plurality of PUCCHs to be transmitted except the at least two PUCCHs with repetition transmission, overlaps with at least one PUCCH of the at least two PUCCHs with repetition transmission.

In a fifty- first clause, a network device is provided and includes:
a second determination module, configured to determine a target physical uplink control channel (PUCCH) set from a plurality of PUCCHs to be transmitted in a case that the plurality of PUCCHs to be transmitted exist in a first slot, where the network device does not configure the plurality of PUCCHs to be transmitted as one or more of the following situations:

that the plurality of PUCCHs to be transmitted include at least two PUCCHs with repetition transmission;

that the plurality of PUCCHs to be transmitted include a first PUCCH, a second PUCCH, and a third PUCCH, the first PUCCH and the second PUCCH are PUCCHs with repetition transmission, the first PUCCH does not overlap with the second PUCCH, the third PUCCH overlaps with the first PUCCH and the second PUCCH, and a priority of the third PUCCH is between a priority of the first PUCCH and a priority of the second PUCCH; and

that the plurality of PUCCHs to be transmitted include the first PUCCH, the second PUCCH and the third PUCCH, the first PUCCH and the second PUCCH are PUCCHs with repetition transmission, the first PUCCH overlaps with the second PUCCH, the priority of the first PUCCH is lower than the priority of the second PUCCH, the first PUCCH overlaps with the third PUCCH, and the priority of the third PUCCH is lower than the priority of the first PUCCH.

In a fifty-second clause, according to the fifty-first clause, priorities of the plurality of PUCCHs to be transmitted are determined according to one or more of the following information:

priorities of uplink control information (UCI) types carried by the plurality of PUCCHs to be transmitted;
starting slots of the plurality of PUCCHs to be transmitted;
starting symbols of the plurality of PUCCHs to be transmitted; and
duration of the plurality of PUCCHs to be transmitted.

In a fifty-third clause, a terminal device is provided and includes a memory and a processor, where the memory is configured to store a program, and the processor is configured to invoke the program in the memory to perform the method according to any one of the first clause to the eighteenth clause.

In a fifty-fourth clause, a network device is provided and includes a memory and a processor, where the memory is configured to store a program, and the processor is configured to invoke the program in the memory to perform the method according to any one of the nineteenth clause to the thirty-sixth clause.

In a fifty-fifth clause, an apparatus is provided and includes a processor, configured to invoke a program from a memory to perform the method according to any one of the first clause to the eighteenth clause

In a fifty-sixth clause, an apparatus is provided and includes a processor, configured to invoke a program from a memory to perform the method according to any one of the nineteenth clause to the thirty-sixth clause.

In a fifty-seventh clause, a chip is provided and includes a processor, configured to invoke a program from a memory, so as to enable a device equipped with the chip to perform the method according to any one of the first clause to the eighteenth clause.

In a fifty-eighth clause, a chip is provided and includes a processor, configured to invoke a program from a memory, so as to enable a device equipped with the chip to perform the method according to any one of the nineteenth clause to the thirty-sixth clause.

In a fifty-ninth clause, a computer-readable storage medium is provided and stores a program thereon, where the program enables a computer to perform the method according to any one of the first clause to the eighteenth clause.

In a sixtieth clause, a computer-readable storage medium is provided and stores a program thereon, where the program enables a computer to perform the method according to any one of the nineteenth clause to the thirty-sixth clause.

In a sixty-first clause, a computer program product is provided and includes a program, where the program enables a computer to perform the method according to any one of the first clause to the eighteenth clause.

In a sixty-second clause, a computer program product is provided and includes a program, where the program enables a computer to perform the method according to any one of the nineteenth clause to the thirty-sixth clause.

In a sixty-third clause, a computer program is provided, and the computer program enables a computer to perform the method according to any one of the first clause to the eighteenth clause.

In a sixty-fourth clause, a computer program is provided, and the computer program enables a computer to perform the method according to any one of the nineteenth clause to the thirty-sixth clause.

## Claims

1. A terminal device, characterize by comprising a memory (1520), a processor (1510) and a transceiver (1530), wherein the memory (1520) is configured to store a program, and the program which, when executed by the processor (1510), causes the processor (1510) of the terminal device to perform:
determining a target physical uplink control channel, PUCCH, set from a plurality of PUCCHs to be transmitted, in a case that the plurality of PUCCHs to be transmitted exist in a first slot, and the plurality of PUCCHs to be transmitted comprise at least two PUCCHs with repetition transmission, wherein PUCCHs in the target PUCCH set meet a first condition, and the first condition comprises that:
if overlapping PUCCHs exist, the at least two PUCCHs with repetition transmission are not comprised in the overlapping PUCCHs; or no overlapping PUCCHs exist.

2. The terminal device according to claim 1, wherein determining the target PUCCH set from the plurality of PUCCHs to be transmitted, comprises:

   determining a first PUCCH from a first PUCCH set according to a first rule; and
   determining the target PUCCH set from the plurality of PUCCHs to be transmitted according to the first PUCCH; wherein the first PUCCH set comprises part or all PUCCHs of the at least two PUCCHs with repetition transmission, and the first PUCCH is a PUCCH with repetition transmission.

3. The terminal device according to claim 2, wherein the first rule comprises one or more of the following:

   determining the first PUCCH based on a priority of an uplink control information, UCI, type comprised in a PUCCH, the first PUCCH being a PUCCH including a UCI type with a highest priority in the first PUCCH set;
   determining the first PUCCH based on a starting slot of the PUCCH, the first PUCCH being a PUCCH with an earliest starting slot in the first PUCCH set;
   determining the first PUCCH based on a starting symbol of the PUCCH, the first PUCCH being a PUCCH with an earliest starting symbol in the first PUCCH set; and
   determining the first PUCCH based on duration of the PUCCH, the first PUCCH being a PUCCH with longest duration in the first PUCCH set.

4. The terminal device according to claim 2 or 3, wherein determining the target PUCCH set from the plurality of PUCCHs to be transmitted according to the first PUCCH, comprises:
   determining a PUCCH to be transmitted and/or PUCCH(s) not to be transmitted from a first PUCCH subset according to a second rule, wherein the first PUCCH subset consists of the first PUCCH and PUCCH(s) overlapping with the first PUCCH.

5. The terminal device according to claim 4, wherein determining the target PUCCH set from the plurality of PUCCHs to be transmitted according to the first PUCCH, comprises:
   determining the target PUCCH set according to the PUCCH to be transmitted and/or the PUCCH(s) not to be transmitted, the plurality of PUCCHs to be transmitted, and the first condition.

6. The terminal device according to claim 5, wherein determining the target PUCCH set according to the PUCCH to be transmitted and/or the PUCCH(s) not to be transmitted, the plurality of PUCCHs to be transmitted, and the first condition, comprises:
   if remaining PUCCHs after the PUCCH(s) not to be transmitted from the plurality of PUCCHs to be transmitted is removed meet the first condition, making the remaining PUCCHs constitute the target PUCCH set.

7. The terminal device according to any one of claims 4 to 6, wherein the second rule comprises at least one of the following:

   that if any PUCCH in a second PUCCH subset comprises a UCI type with a same priority as that of the first PUCCH, the transceiver (1530) transmits a PUCCH with an earlier starting slot, and/or does not transmit PUCCH(s) with a later starting slot; and
   that if any PUCCH in the second PUCCH subset does not comprise a UCI type with the same priority as that of the first PUCCH, the transceiver (1530) transmits a PUCCH including a UCI type with a higher priority, and/or does not transmit PUCCH(s) including a UCI type with lower priority;
   wherein the second PUCCH subset consists of PUCCHs overlapping with the first PUCCH.

8. The terminal device according to any one of claims 3 to 7, wherein the program which, when executed by the processor (1510), causes the processor (1510) of the terminal device further to perform:
   if the at least two PUCCHs with repetition transmission comprise a plurality of second PUCCHs with a same starting symbol, selecting a PUCCH with longest duration from the plurality of second PUCCHs as the first PUCCH.

9. The terminal device according to any one of claims 3 to 8, wherein a UCI type comprised in the at least two PUCCHs with repetition transmission comprises one or more of the following: a hybrid automatic repeat request acknowledgement, HARQ-ACK, a scheduling request, SR, higher priority channel-state information, CSI, and lower priority CSI, wherein a priority of the HARQ-ACK is higher than a priority of the SR, the priority of the SR is higher than a priority of the higher priority CSI, and the priority of the higher priority CSI is higher than a priority of the lower priority CSI.

**10.** A network device, characterize by comprising a memory (1520), a processor (1510) and a transceiver (1530), wherein the memory (1520) is configured to store a program, and the program which, when executed by the processor (1510), causes the processor (1510) of the network device to perform:
determining, a target physical uplink control channel, PUCCH, set from a plurality of PUCCHs to be transmitted, in a case that the plurality of PUCCHs to be transmitted exist in a first slot, and the plurality of PUCCHs to be transmitted comprise at least two PUCCHs with repetition transmission, wherein PUCCHs in the target PUCCH set meet a first condition, and the first condition comprises that:

if overlapping PUCCHs exist, the at least two PUCCHs with repetition transmission are not comprised in the overlapping PUCCHs; or no overlapping PUCCHs exist;
wherein determining the target PUCCH set from the plurality of PUCCHs to be transmitted, comprises:

determining a first PUCCH from a first PUCCH set according to a first rule; and
determining the target PUCCH set from the plurality of PUCCHs to be transmitted according to the first PUCCH;
wherein the first PUCCH set comprises part or all PUCCHs of the at least two PUCCHs with repetition transmission, and the first PUCCH is a PUCCH with repetition transmission; and
the first rule comprises one or more of the following:

determining the first PUCCH based on a priority of an uplink control information, UCI, type comprised in a PUCCH, the first PUCCH being a PUCCH including a UCI type with a highest priority in the first PUCCH set;
determining the first PUCCH based on a starting slot of the PUCCH, the first PUCCH being a PUCCH with an earliest starting slot in the first PUCCH set;
determining the first PUCCH based on a starting symbol of the PUCCH, the first PUCCH being a PUCCH with an earliest starting symbol in the first PUCCH set; and
determining the first PUCCH based on duration of the PUCCH, the first PUCCH being a PUCCH with longest duration in the first PUCCH set.

**11.** The network device according to claim 10, wherein determining the target PUCCH set from the plurality of PUCCHs to be transmitted according to the first PUCCH, comprises:

determining a PUCCH to be transmitted and/or PUCCH(s) not to be transmitted from a first PUCCH subset according to a second rule, wherein the first PUCCH subset consists of the first PUCCH and PUCCH(s) overlapping with the first PUCCH;
wherein determining the target PUCCH set from the plurality of PUCCHs to be transmitted according to the first PUCCH, comprises:
determining the target PUCCH set according to the PUCCH to be transmitted and/or the PUCCH(s) not to be transmitted, the plurality of PUCCHs to be transmitted, and the first condition.

**12.** The network device according to claim 11, wherein determining the target PUCCH set according to the PUCCH to be transmitted and/or the PUCCH(s) not to be transmitted, the plurality of PUCCHs to be transmitted, and the first condition, comprises:
if remaining PUCCHs after the PUCCH(s) not to be transmitted from the plurality of PUCCHs to be transmitted is removed meet the first condition, making the remaining PUCCHs constitute the target PUCCH set.

**13.** The network device according to claim **11** or 12, wherein the second rule comprises at least one of the following:

that if any one PUCCH in a second PUCCH subset comprises a UCI type with a same priority as that of the first PUCCH, the transceiver (1530) transmits a PUCCH with an earlier starting slot, and/or does not transmit a PUCCH with a later starting slot; and
that if any one PUCCH in the second PUCCH subset do not comprise the UCI type with the same priority as that of the first PUCCH, the transceiver (1530) transmits a PUCCH including a UCI type with a higher priority, and/or does not transmit a PUCCH including a UCI type with lower priority;
wherein the second PUCCH subset consists of PUCCHs overlapping with the first PUCCH.

**14.** The network device according to any one of claims 10 to 13, wherein the program which, when executed by the processor (1510), causes the processor (1510) of the network device further to perform:

if the at least two PUCCHs with repetition transmission comprise a plurality of second PUCCHs with a same starting symbol, selecting a PUCCH with longest duration from the plurality of second PUCCHs as the first PUCCH.

15. The network device according to any one of claims 10 to 14, wherein a UCI type comprised in the at least two PUCCHs with repetition transmission comprises one or more of the following: a hybrid automatic repeat request acknowledgement, HARQ-ACK, a scheduling request, SR, higher priority channel-state information, CSI, and lower priority CSI, wherein a priority of the HARQ-ACK is higher than a priority of the SR, the priority of the SR is higher than a priority of the higher priority CSI, and the priority of the higher priority CSI is higher than a priority of the lower priority CSI.

100

110

120

120

FIG. 1

| D | D | D | U | U | D | D | D | U | U |
|---|---|---|---|---|---|---|---|---|---|
| | | | PUCCH | PUCCH | | | | PUCCH | PUCCH |

FIG. 2

SR with repetition transmission

CSI

HARQ-ACK

FIG. 3

CSI with repetition transmission

SR

HARQ-ACK with repetition transmission

FIG. 4

SR or CSI

HARQ-ACK1 with repetition transmission

HARQ-ACK2 with repetition transmission

FIG. 5

```
        ┌─────────────┐
        │    Begin    │
        └─────────────┘
```

In a case where a plurality of PUCCHs to be transmitted exist in a first slot, and the plurality of PUCCHs to be transmitted include at least two PUCCHs with repetition transmission, determine a target PUCCH set from the plurality of PUCCHs to be transmitted, PUCCHs in the target PUCCH set meeting a first condition ⟍ S610

```
        ┌─────────────┐
        │     End     │
        └─────────────┘
```

**FIG. 6**

Constitute an initial first PUCCH set by at least two PUCCHs with repetition transmission and PUCCH(s) overlapping with the at least two PUCCHs with repetition transmission ⟍ S705

Determine a first PUCCH from a first PUCCH set according to a first rule ⟍ S710

Determine PUCCH(s) to be transmitted and/or PUCCH(s) not to be transmitted from a first PUCCH subset according to a second rule ⟍ S720

Determine the target PUCCH set according to the PUCCH to be transmitted and/or the PUCCH not to be transmitted, the plurality of PUCCHs to be transmitted, and the first condition ⟍ S730

**FIG. 7**

Determine a first PUCCH from a first PUCCH set according to a first rule ⟍ S710

Determine PUCCH(s) to be transmitted and/or PUCCH(s) not to be transmitted form a first PUCCH subset according to a second rule ⟍ S720

Determine the remaining PUCCHs after the PUCCH not to be transmitted is removed from the plurality of PUCCHs to be transmitted

The first condition — no / yes

Constitute the PUCCH set by the remaining PUCCHs

**FIG. 8**

| CSI |
|-----|

| SR |
|-----|

| HARQ-ACK1 with repetition transmission |
|-----|

| HARQ-ACK2 with repetition transmission |
|-----|

FIG. 9

Begin

In a case where the plurality of PUCCHs to be transmitted exist in the first slot, the terminal device determines the target PUCCH set from the plurality of PUCCHs to be transmitted, and the terminal device does not expect one or more situations

S1010

End

FIG. 10

Terminal device 1100

First determination module 1110

FIG. 11

Terminal device 1200

Second determination module 1210

FIG. 12

Network device 1300

First determination module 1310

FIG. 13

Network device 1400

Second determination module 1410

FIG. 14

Apparatus 1500

Processor
1510

Memory
1520

Transceiver
1530

FIG. 15